# EUROPEAN PATENT APPLICATION

(11) **EP 4 745 749 A1**
(43) Date of publication of application: **20.05.2026**
(21) Application number: 24906477.5
(22) Date of filing: 19.12.2024
(51) Int. Cl.: G06F 3/14

(54) **MULTI-SCREEN ELECTRONIC DEVICE AND USE METHOD FOR MULTI-SCREEN ELECTRONIC DEVICE**

(30) Priority: 22.12.2023 CN 202311788486
(71) Applicant: Huawei Technologies Co., Ltd., Shenzhen, Guangdong 518129 (CN)
(72) Inventor: ZHAO, Shaohua, Shenzhen, Guangdong 518129 (CN); WANG, Yun, Shenzhen, Guangdong 518129 (CN); LI, Xue, Shenzhen, Guangdong 518129 (CN); ZHOU, Ben, Shenzhen, Guangdong 518129 (CN)
(74) Representative: Körber, Martin Hans
(86) International application number: PCT/CN2024/140750
(87) International publication number: WO 2025/131002

(57) **Abstract**

This application discloses a multi-screen electronic device and a method for using the multi-screen electronic device. In the method, the electronic device may create a plurality of different user spaces according to a multi-user space mechanism, and may access different user spaces via different screens. In this way, data generated when different users use different screens is naturally isolated with the user spaces. In addition, the method further expands a quantity of foreground user spaces, and each screen corresponds to one foreground user space. In this way, each screen can be used independently without interfering with each other.

## Description

This application claims priority to Chinese Patent Application No. 202311788486.5, filed with the China National Intellectual Property Administration on December 22, 2023 and entitled "MULTI-SCREEN ELECTRONIC DEVICE AND METHOD FOR USING MULTI-SCREEN ELECTRONIC DEVICE", which is incorporated herein by reference in its entirety.

### TECHNICAL FIELD

This application relates to the field of terminal technologies, and in particular, to a multi-screen electronic device and a method for using the multi-screen electronic device.

### BACKGROUND

With development of chip manufacturing technologies and screen manufacturing technologies, a solution in which one chip with powerful performance is connected to a plurality of screens at the same time gradually becomes a trend. For example, a plurality of screens on a same vehicle share one chip, and a plurality of electric appliances with a screen in a smart home share one chip. Compared with screens using independent chips, a plurality of screens with a single chip can reduce costs. In addition, the plurality of screens share one operating system, and data can be shared among the plurality of screens.

A multi-screen device with a single chip supports independent use by a plurality of users (natural persons). How to implement that a plurality of users do not interfere with each other when using screens and data of the users is isolated from each other is a problem that needs to be resolved currently.

### SUMMARY

This application provides a multi-screen electronic device and a method for using the multi-screen electronic device, to support independent use of each screen without interfering with each other.

According to a first aspect, a method for using a multi-screen electronic device is provided, applied to an electronic device including a first screen and a second screen. The method may include: displaying a user interface of a first application in a first user space on the first screen, and displaying a user interface of a first application in a second user space on the second screen; and displaying a user interface of a second application in a third user space on the first screen, and continuously displaying the user interface of the first application in the second user space on the second screen.

According to the method in the first aspect, each screen corresponds to one foreground user space. In this way, each screen can be used independently without interfering with each other. Details are as follows: 1. Different users may use a same application on different screens, with no interference with each other. 2. When the electronic device switches a foreground user space of the first screen, a foreground user space of the second screen is not affected. In this process, the foreground user space (namely, the second user space) of the second screen may continuously run, and the second screen may continuously display an original user interface. According to the method solution in the first aspect, independent use of different screens can be implemented in a convenient, simple, and cost-effective manner, and there is no need to customize an application or perform complex data isolation in a task dimension. In this solution, use of the multi-screen electronic device can be more user-friendly, and user experience can be improved.

With reference to the first aspect, in some implementations, package names of the first application in the first user space and the first application in the second user space are consistent. Optionally, in some implementations, application icons and application names of the two may also be consistent.

With reference to the first aspect, in some implementations, the first application in the first user space and the first application in the second user space are installed based on a same installation package.

With reference to the first aspect, in some implementations, the electronic device further includes one processing chip, and the first user space, the second user space, and the third user space run on the processing chip. In this way, the multi-screen independent use solution in this application is implemented based on a same processing chip, and a plurality of processing chips are not required, so that costs can be reduced.

With reference to the first aspect, in some implementations, before displaying, on the first screen, the user interface of the first application installed in first user space, and displaying, on the second screen, the user interface of the first application installed in the second user space, the method may further include: The electronic device receives a power-on operation; and first skips displaying a second home screen on the second screen, then displays a first home screen on the first screen, and displays the second home screen on the second screen. An application corresponding to an application icon displayed on the first home screen is installed in the first user space, and an application corresponding to an application icon displayed on the second home screen is installed in the second user space. In this way, a case in which the second screen first enters the home screen and then the first screen enters the home screen can be avoided, and good user experience can be provided.

With reference to the foregoing implementation, that the second screen first skips displaying the second home screen may be implemented in the following several manners: first displaying a pure black page or a page close to pure black on the second screen, or first not powering on the second screen.

With reference to the first aspect, in some implementations, after the user interface of the first application in the second user space is continuously displayed on the second screen, the method may further include: displaying, on the second screen, a user interface provided by the first user space. A quantity of applications provided by the first user space on the second screen is less than a quantity of applications provided by the first user space on the first screen. That is, when different screens access a same user space, accessible content is different. In this way, personalized permission management can be implemented on different screens.

With reference to the first aspect, in some implementations, after the user interface of the first application in the second user space is continuously displayed on the second screen, the method may further include: displaying the user interface of the first application in the first user space on the second screen. Functions provided by the first application in the first user space on the second screen are less than functions provided by the first application in the first user space on the first screen. That is, when different screens access a same application in a same user space, functions provided by the application may be different. In this way, personalized permission management can be implemented on different screens.

With reference to the first aspect, in some implementations, before the user interface of the first application in the first user space is displayed on the first screen, and the user interface of the first application in the second user space is displayed on the second screen, the method may further include: storing a correspondence between the first screen and the first user space, and storing a correspondence between the second screen and the second user space. Before the user interface of the second application in the third user space is displayed on the first screen, and the user interface of the first application in the second user space is continuously displayed on the second screen, the method may further include: updating the correspondence between the first screen and the first user space to a correspondence between the first screen and the third user space. In other words, the electronic device stores a correspondence between a screen and a foreground user space of the screen, so that the electronic device can manage each screen.

With reference to the foregoing implementation, the correspondence that is between the screen and the user space and that is stored in the electronic device may be stored in a data structure DisplayTopUserMap.

With reference to the first aspect, in some implementations, before the user interface of the first application in the first user space is displayed on the first screen, the method may further include: determining a screen type of the first screen on which the first user space is located; and determining, based on the screen type of the first screen, an application provided by the first user space on the first screen, or determining a function provided by the first application of the first user space on the first screen. This facilitates permission management on different screens.

With reference to the foregoing implementation, the electronic device may determine, by invoking a getDisplayTypeByUser interface, the screen type of the first screen on which the first user space is located.

With reference to the first aspect, in some implementations, before the user interface of the first application in the first user space is displayed on the first screen, the method may further include: determining whether the first user space is the foreground user space of the first screen; and if yes, starting an activity of the first application in the first user space, and drawing a window of the first application.

With reference to the foregoing implementation, the electronic device may determine, by invoking an isDisplayTopUser interface, whether the first user space is the foreground user space of the first screen.

With reference to the first aspect, in some implementations, after the user interface of the first application in the first user space is displayed on the first screen, and the user interface of the first application in the second user space is displayed on the second screen, and before the user interface of the second application in the third user space is displayed on the first screen, the method may further include: switching the foreground user space of the first screen from the first user space to the third user space.

With reference to the foregoing implementation, the electronic device may switch the foreground user space of the first screen from the first user space to the third user space by invoking a currentUser switch interface.

With reference to the first aspect, in some implementations, after the user interface of the second application in the third user space is displayed on the first screen, and the user interface of the first application in the second user space is continuously displayed on the second screen, the method may further include: exchanging the third user space running in the foreground of the first screen and the second user space running in the foreground of the second screen.

With reference to the foregoing implementation, the electronic device may exchange the foreground user space of the first screen with the foreground user space of the second screen by invoking a swapUsersBetweenDisplay interface.

With reference to the first aspect, in some implementations, after displaying, on the first screen, the user interface of the second application installed in the third user space, and continuously displaying, on the second screen, the user interface of the first application installed in the second user space, the method may further include: switching the foreground user space of the second screen from the second user space to a fourth user space.

With reference to the foregoing implementation, the electronic device may switch the foreground user space of the second screen from the second user space to the fourth user space by invoking a switchUserToDisplay interface.

With reference to the first aspect, in some implementations, the first screen is a central display in a vehicle, and the second screen is a passenger screen or a rear screen in the vehicle.

With reference to the first aspect, in some implementations, before the user interface of the first application in the first user space is displayed on the first screen, and the user interface of the first application in the second user space is displayed on the second screen, the method may further include: logging in to a first account on the first screen, and logging in to a second account on the second screen. Before the user interface of the second application in the third user space is displayed on the first screen, the method may further include: switching a logged-in-to account on the first screen from the first account to a third account.

With reference to the foregoing implementation, the first account is an account corresponding to the first user space, the second account is an account corresponding to the second user space, and the third account is an account corresponding to the third user space.

According to a second aspect, an electronic device is provided, including one or more processors, one or more memories, a first screen, and a second screen. The first screen, the second screen, and the one or more memories are coupled to the one or more processors. The one or more memories are configured to store computer program code, and the computer program code includes computer instructions. When the one or more processors execute the computer instructions, the electronic device is enabled to perform the method provided in any one of the first aspect or the implementations of the first aspect.

According to a third aspect, a vehicle is provided, including the electronic device according to the second aspect.

According to a fourth aspect, a computer-readable storage medium is provided, including instructions. When the instructions are run on an electronic device, the electronic device is enabled to perform the method provided in any one of the first aspect or the implementations of the first aspect.

According to a fifth aspect, a computer program product is provided. When the computer program product runs on a computer, the computer is enabled to perform the method provided in any one of the first aspect or the implementations of the first aspect.

According to a sixth aspect, a chip system is provided. The chip system includes one or more processors, and the processor is configured to invoke computer instructions to perform the method according to any one of the first aspect or the implementations of the first aspect.

### BRIEF DESCRIPTION OF DRAWINGS

FIG. 1A to FIG. 1C show three use solutions of a multi-screen electronic device;
FIG. 2 shows a relationship between a system user space, a user space of a natural person user, and a guest space according to an embodiment of this application;
FIG. 3 shows home screens displayed when different screens access a same user space according to an embodiment of this application;
FIG. 4A and FIG. 4B show a procedure of creating a user space when a vehicle is powered on for the first time according to an embodiment of this application;
FIG. 5A to FIG. 5D show a group of user interfaces displayed on two screens in a use process according to an embodiment of this application;
FIG. 6a and FIG. 6b show a procedure of displaying a home screen on a central display and a procedure of displaying a home screen on a passenger screen when a vehicle is powered on for the first time according to an embodiment of this application;
FIG. 7A and FIG. 7B show a procedure in which an electronic device starts an application according to an embodiment of this application;
FIG. 8A and FIG. 8B show a procedure in which an electronic device draws a window according to an embodiment of this application;
FIG. 9 shows a procedure in which a vehicle switches a user space according to an embodiment of this application;
FIG. 10a and FIG. 10b show a procedure in which two screens of a vehicle exchange user spaces and a procedure in which a passenger screen switches a foreground user space according to an embodiment of this application;
FIG. 11 is a flowchart of a method for using a multi-screen electronic device according to an embodiment of this application;
FIG. 12 is a block diagram of a hardware structure of an electronic device in a non-vehicle form according to an embodiment of this application;
FIG. 13 is a block diagram of a hardware structure of an electronic device in a vehicle form according to an embodiment of this application; and
FIG. 14 is a software architecture of an electronic device according to an embodiment of this application.

### DESCRIPTION OF EMBODIMENTS

The technical solutions according to embodiments of this application are clearly and completely described in the following with reference to the accompanying drawings.

The electronic device provided in this application has a plurality of screens, and the plurality of screens are all connected to a same processing chip. The processing chip is configured to perform operations such as calculation, command receiving, command storage, and data processing, and may further provide a running environment of an operating system, to support the electronic device in running one operating system and a plurality of user spaces on the processing chip. The operating system running on the processing chip may be any one of Android^{®}, Linux^{®}, HarmonyOS^{®}, iOS^{®}, Windows^{®}, and the like. The processing chip may integrate components such as an application processor (application processor, AP), a graphics processing unit (graphics processing unit, GPU), a digital signal processor (digital signal processor, DSP), an image signal processor (image signal processor, ISP), an audio signal processor (audio signal processor, ASP), an image video processor (image video processor, IVP), a baseband processor, a neural network processing unit (neural-network processing unit, NPU), and a microcontroller unit (microcontroller unit, MCU), and may further integrate some peripheral circuits and the like.

The plurality of screens of the electronic device may be located in a same space but have a specific distance from each other, or may be located in different spaces. A physical distance between the plurality of screens of the electronic device is not limited in this application. The electronic device may be a vehicle having a plurality of screens. The vehicle may include screens such as a central display located between a driver seat and a front passenger seat, a passenger screen in front of the front passenger seat, and a rear screen in front of a rear seat. The plurality of screens are all located in the vehicle space. Sizes of the plurality of screens are not limited in this application, and sizes of any two screens may be the same or may be different. Alternatively, the electronic device may be a smart appliance having a plurality of screens, and the plurality of screens of the smart appliance may be located in different rooms or may be located in a same room. The electronic device may alternatively be a desktop computer, a desktop computer with a touch-sensitive surface or a touch panel, a smart screen, a notebook computer, a mobile phone, a tablet computer, or the like. For ease of description, a vehicle having a plurality of screens is used as an example for description in subsequent embodiments.

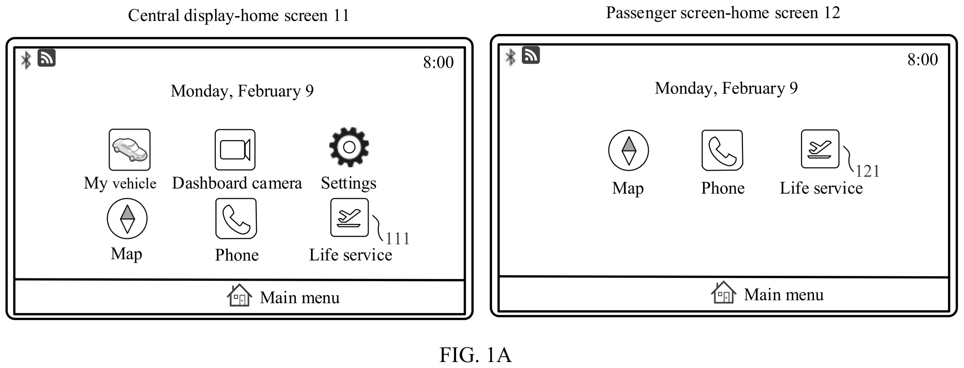

FIG. 1A to FIG. 1C show three use solutions of a multi-screen electronic device.

FIG. 1A shows a solution of customizing applications for different screens. As shown in FIG. 1A, icons of all applications installed on a vehicle are displayed on a home screen 11 of a central display, and only icons of some applications are displayed on a home screen 12 of a passenger screen. To enable "a same application" to be started and used on the two screens at the same time, two applications are installed on the electronic device, and are respectively provided for the central display and the passenger screen. Icons and application names of the two applications are the same, for example, an icon 111 on the home screen 11 and an icon 121 on the home screen 12, but actual package names of the two applications are different. In this way, a user can feel that "a same application" can be used on two screens without interfering with each other. In this solution, an application provider needs to customize applications with different package names but a same icon and a same name for different screens. When there are a large quantity of screens or a large quantity of applications connected to the passenger screen, costs are correspondingly increased.

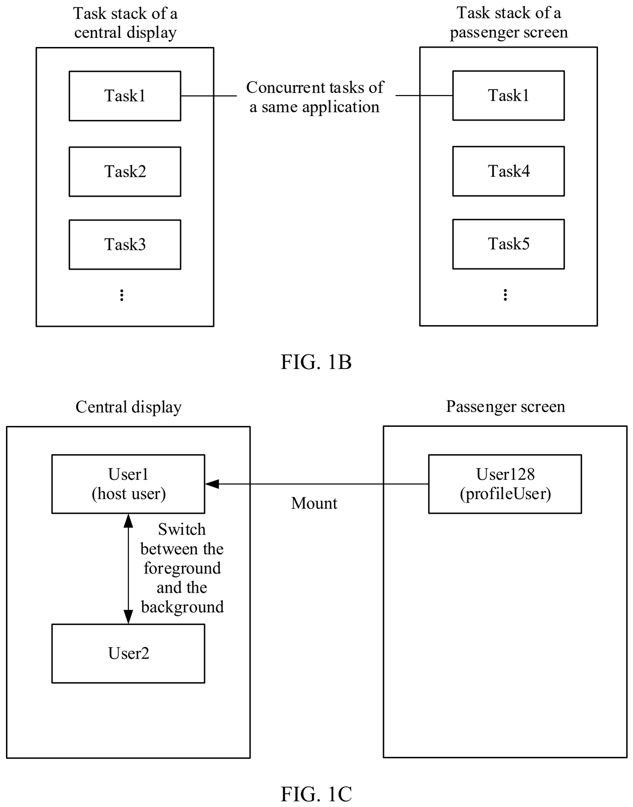

FIG. 1B shows a solution in which a single application supports a plurality of tasks. An Android^{®} operating system is used as an example. A page displayed on a screen is managed by using a task (task) as a granularity. A plurality of tasks form a task stack that can be operated and used by the user, and different screens may be placed in different task stacks. As shown in FIG. 1B, Android^{®} supports that one application creates a plurality of tasks with same content in a same user space, and then starts each task and displays the tasks on different screens. In this way, it can be ensured that the user uses a same application on different screens at the same time without interfering with each other. This solution requires the application provider to adapt to the application, so that a single application can support a plurality of concurrent tasks with the same content, and data of different users can to be isolated at the task level.

FIG. 1C shows a multi-user space solution for implementing data isolation. Android^{®} provides a multi-user space mechanism, and defines a case that an entire electronic device has only one user space (currentUser) in the foreground, and cannot run a same application in different user spaces on different screens. To resolve this problem, a mounting mechanism is provided. To be specific, a user space (for example, user128, referred to as profileUser) is created and mounted to a user space (for example, user1). A status of profile User is the same as a status of the host user. In this way, when the host user runs in the foreground, profileUser can also run in the foreground. For example, user1 may be run on the central display, and user128 may be run on the passenger screen. In this way, the two screens run different user spaces without interfering with each other. However, if user1 of the central display returns to the background, user128 of the passenger screen also returns to the background. In this solution, same applications can be started and used on different screens at the same time without interfering with each other. However, once the status of the host user changes, the status of profile User on the other screen is affected.

The method for using a multi-screen electronic device and the electronic device provided in this application can resolve the foregoing problem. In the method, a multi-user space mechanism is used. The electronic device may create a plurality of different user spaces, and the different user spaces may be accessed via different screens. Data generated when different users use different screens is naturally isolated with the user spaces. In addition, the method further expands a quantity of foreground user spaces. Each screen corresponds to one foreground user space instead of an entire device corresponding to one foreground space. In this way, each screen can be used independently without interfering with each other. For example, starting an application, closing an application, operating an application, deleting an application, switching a user space, and the like on a screen do not affect an operation on another screen. A same application may also be started or a user space may not be switched on the another screen. That is, the two screens may be completely used independently. Two users may each use one screen, and use experience of the two users is not affected.

According to the solution of this application, independent use of different screens can be implemented in a convenient, simple, and cost-effective manner, and there is no need to customize an application or perform complex data isolation in a task dimension. In this solution, use of the multi-screen electronic device can be more user-friendly, and user experience can be improved.

Before the solution provided in this application are described in detail, several important concepts in this application are first described.

### User space (User)

The user space is a resource set specially allocated by an electronic device, and may include a storage resource, a compute resource, a running environment of an application, and the like. The user space may be used to install an application, run an application, and store data (for example, a downloaded application, and data such as a chat record and a photographed photo in a process of using the application) generated in a process in which a user uses the electronic device. Different user spaces are physically isolated from each other. Therefore, data in different user spaces may be isolated from each other.

The user space in this application may include at least the following three types.

### 1. User space of a natural person user

A user and a user space may be in a one-to-one correspondence, and the user space may be marked by using an account of the user. The electronic device creates an account and a corresponding user space for the user. Subsequently, when the user logs in to the account, the electronic device invokes the user space to provide a service for the user, for example, displays an icon of an application installed in the user space, and stores a chat record, a photographed photo, or the like of the user in the user space. Different users use the electronic device based on different accounts, and the electronic device switches accounts and uses different user spaces to provide services. The user space of the natural person user can be accessed only through an account. The user space of the natural person user and the account are in a one-to-one correspondence.

### 2. Guest space

The guest space is not marked by any account and does not correspond to any natural person user, and the guest space can be used by any user. A quantity of guest spaces in the electronic device is the same as a quantity of screens, and one screen corresponds to one guest space. The guest space can be accessed without an account.

### 3. System user space

In addition to the user space provided for each user to use, the entire electronic device includes one system user space (systemUser), which may be denoted as user0. The system user space is a running environment of various system services based on an application framework layer, and is a set that provides system services (system services) for a user space of another natural person user and the guest space. In other words, the system user space provides an underlying service support. The system user space runs when the electronic device is started.

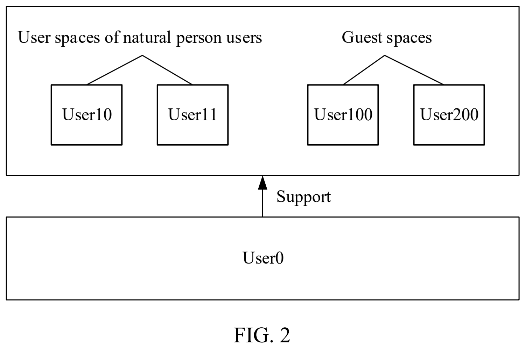

FIG. 2 shows an example of a relationship between the system user space, the user space of the natural person user, and the guest space. As shown in FIG. 2, the system user space (user0) serves as an underlying support for the remaining user spaces. User spaces (such as user10 and user11) of natural person users and guest spaces (such as user100 and user200) can be provided for users to use. A user may access a corresponding user space of a natural person user on the screen based on an account, and the user may further access a guest space of the screen through the screen.

For the electronic device, the user space may also be considered as a user (User). User herein refers to an account used by a common user (including a natural person user, a guest, and the like). The electronic device may distinguish between different users (Users) by distinguishing between different accounts.

### Foreground user space of a screen (DisplayTopUser)

The foreground user space is a user space running in the foreground when the electronic device is started, and content displayed in the foreground on the screen is provided by the foreground user space.

Compared with an entire device corresponding to one foreground user space (currentUser) natively defined by Android^{®}, a concept of the foreground user space of the screen is newly added in this application. Each screen corresponds to one foreground user space, and different screens may correspond to different foreground user spaces. A foreground user space of a screen may be switched, that is, an original foreground user space is switched to the background, and then another user space is switched to the foreground.

In some implementations, the entire device corresponding to one foreground user space (currentUser) natively defined by Android^{®} may be reserved, and the foreground user space of the entire device is defined as a user space enabled by a primary screen. The currentUser may also be switched. On this basis, a concept of a foreground user space of each screen is added. In other words, each screen of the electronic device corresponds to one foreground user space.

### Interfaces related to the foreground user space of the screen

In this application, related interfaces are further added to the electronic device, to support services related to a foreground user space of each screen, such as switching a foreground user space on a screen, managing a permission scope of a foreground user space on the screen, managing foreground application running on the screen, window management, package management, and a voice service. Types and specific functions of the interfaces are described in subsequent method embodiments.

### Screen type (DisplayType)

A plurality of screens are configured for the electronic device in this application, and one screen may correspond to one screen type. For example, the vehicle may include screen types such as a central display, a passenger screen, a rear screen 1, and a rear screen 2.

The plurality of screens of the electronic device may include one primary screen, and a screen other than the primary screen may be considered as a secondary screen. The primary screen is usually a screen that is frequently used. The primary screen in the plurality of screens may be preset. For example, a primary screen in a vehicle may be a central display, and a primary screen of a smart appliance may be a screen located in a living room.

Based on a natural difference between the primary screen and the secondary screen, in this application, different permissions may be set for the primary screen and the secondary screen, and the permission for the primary screen is higher than the permission for the secondary screen. Different permissions of the primary screen and the secondary screen may be implemented by setting a whitelist of the secondary screen. The electronic device may prestore the whitelist. The whitelist indicates an application that can be accessed on the secondary screen and a function that can be accessed in the application. For example, the permission of the primary screen is not limited, but an application and a function that are not in the whitelist cannot be accessed by the secondary screen.

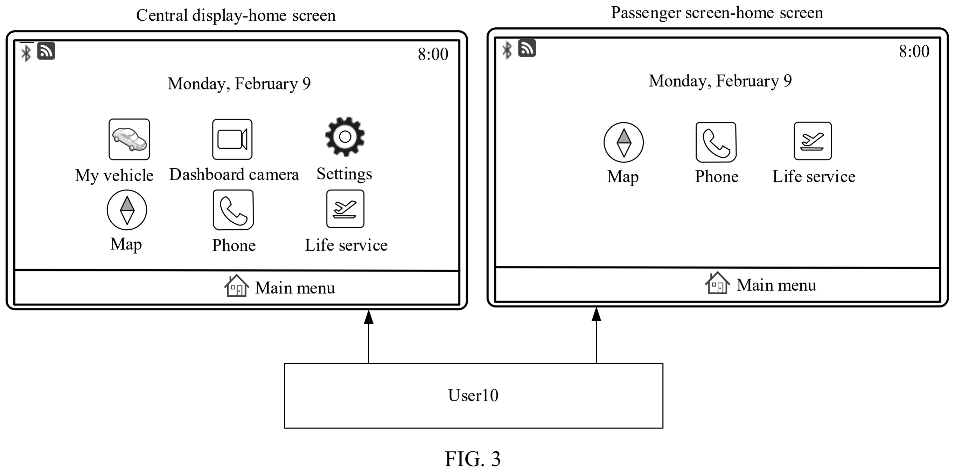

Based on the different permissions of the primary screen and the secondary screen, when a user space of a same natural person user is accessed through the primary screen or the secondary screen, accessible content is different, and content that can be accessed on the primary screen is greater than content that can be accessed on the secondary screen. For example, all applications in the user space can be accessed through the primary screen, and only some applications in the user space can be accessed through the secondary screen. Alternatively, all functions of a system application or a third-party application may be accessed through the primary screen, and only some functions of the system application or the third-party application may be accessed through the secondary screen. For example, as shown in FIG. 3, when the user accesses the user space user10 through the central display in the vehicle, the home screen of the central display can display icons of system applications that manage the vehicle and icons of some third-party applications. When the user accesses the user space user10 through the passenger screen, the home screen of the passenger screen cannot display the icons of the system applications that manage the vehicle, and can display only the icons of some third-party applications. For another example, when the user accesses a setting application in the user space user10 through the central display of the vehicle, the setting application provides a capability of switching a system language; and when the user accesses the setting application in the user space user10 through the passenger screen of the vehicle, the setting application does not provide the capability of switching the system language. In this way, a user who uses the passenger screen can be prevented from affecting driving safety of the vehicle and obtaining privacy data in the vehicle.

Based on the different permissions of the primary screen and the secondary screen, a guest space of the primary screen and a guest space of the secondary screen are also different. For example, a system application and a third-party application may be installed in the guest space of the primary screen, and only a third-party application can be installed in the guest space of the secondary screen. Alternatively, all functions of the system application or the third-party application installed in the guest space of the secondary screen may be accessed through the primary screen, and only some functions of the same system application or the same third-party application installed in the guest space of the secondary screen may be accessed through the secondary screen.

In some implementations, the electronic device may refresh a disabled state and an active state of an application on each screen by using a package management mechanism, to implement different permissions on the primary screen and the secondary screen.

The following describes a method for using a multi-screen electronic device provided in this application.

### Create a user space

An electronic device may separately create user spaces for a plurality of natural person users, and one natural person user corresponds to one user space.

The electronic device may further create a plurality of guest spaces, and one screen corresponds to one guest space. In other words, the electronic device creates guest spaces whose quantity is the same as a quantity of screens.

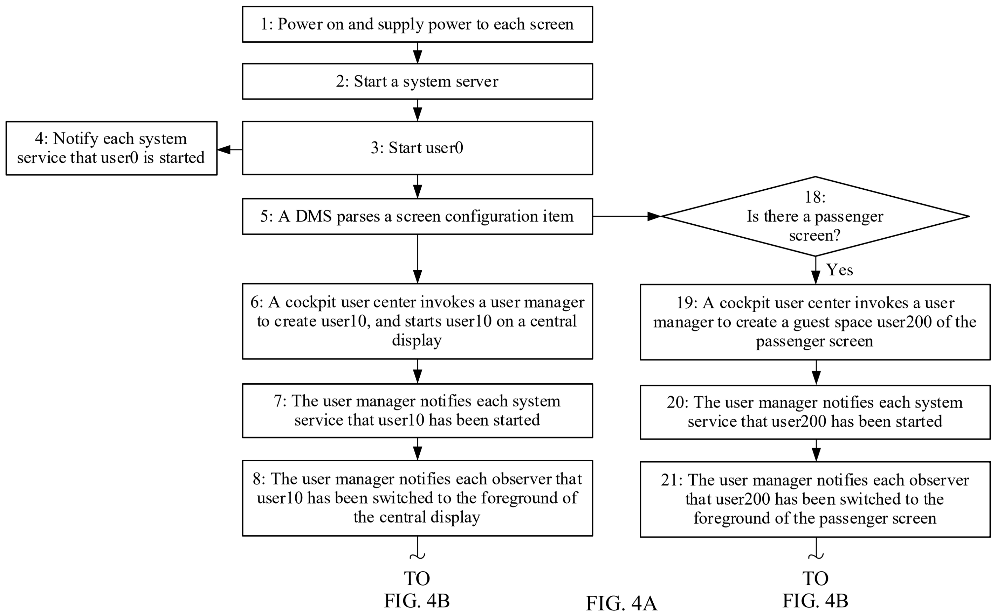

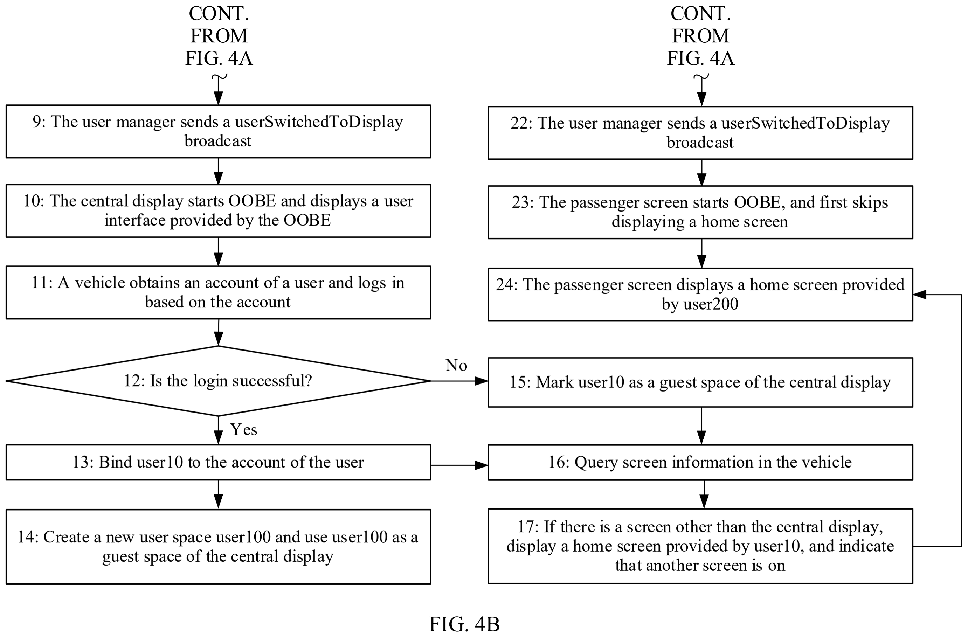

The following uses a vehicle as an example to describe a procedure of creating a user space when the vehicle is powered on for the first time. As shown in FIG. 4A and FIG. 4B, the procedure may include the following steps.
1: Power on and supply power to each screen.
2: Start a system server (systemServer), where systemServer starts a plurality of system services (systemService).
   systemServer is a provider of a basic service in the electronic device, and is a basis for running an operating system of the electronic device. The plurality of system services (systemService) started by systemServer may include an activity manager service (window manager service, AMS), a window manager service (window manager service, WMS), an activity task manager service (activity task manager service, ATMS), screen and user space management (HwMultiDisplayUserEx), and the like.
3: systemServer starts a system user space user0.
4: systemServer notifies each system service that user0 has been started and each system service starts a service of user0.
5: A display manager service (display manager service, DMS) parses a screen configuration item.

The screen configuration item indicates information about a plurality of screens included in the vehicle, including a quantity, types, and the like, and may further include sizes, locations, and the like.

After step 5, steps 6 to 17 and steps 18 to 24 can be performed simultaneously as two branches.

6: A cockpit user center invokes a user manager (userController) to create a new user space, and starts the user space on a central display. The user space may be denoted as, for example, user10.

The cockpit user center is an application that is in the vehicle and that is configured to manage a mapping relationship between each user and each user space, and may also be referred to as another name. This is not limited herein. userController is a management module that is actually used to create a user space, delete a user space, and perform another operation on a user space.

After the user space user10 is created via the central display, the vehicle may install, in user10, pre-installed applications within a permission scope of the central display, for example, some pre-installed system applications and third-party applications. Installation packages of these applications may be pre-installed in the vehicle.
7: userController notifies each system service that user10 has been started.
8: userController notifies each observer (observer) that user10 has been switched to the foreground of the central display. The observer may be defined by a system application, and may include the following three types of objects: a system service (systemService), a
   user space switch observer (UserSwitchObser), and another object (others) notified through a broadcast.
9: userController sends a userSwitchedToDisplay broadcast, where the broadcast indicates that user100 has been switched to the foreground of the central display.
10: The central display starts out of box experience (out of box experience, OOBE). After determining that a current screen is the central display, the OOBE displays, on the central display, a user interface provided by the OOBE.

The out of box experience is an application that guides a user to set some basic functions when a device is powered on for the first time.

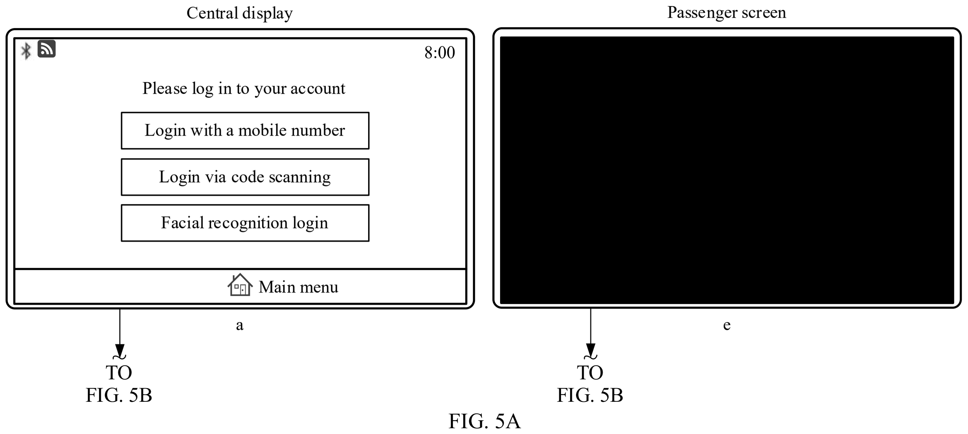

The user interface provided by the OOBE displayed on the central display may guide the user to perform an operation of setting a basic function. For example, the user interface may be a user interface that guides the user to log in, and may display prompt information of a plurality of login manners, for example, login via code scanning, facial recognition login, and login by entering an account and a password. After selecting a login manner, the user can enter an account, for example, a QR code generated based on the account, a facial image, or an account and a password. In some implementations, a pressure sensor may be disposed below a driver seat of the vehicle. After the pressure sensor detects pressure, the vehicle may start a camera in front of the driver seat, to automatically scan a face of the user for login, thereby simplifying a user operation. As shown in FIG. 5A to FIG. 5D, a user interface a at an upper left corner of FIG. 5A to FIG. 5D is an example of a user interface displayed by the OOBE of the central display.

11: The vehicle obtains the account of the user, and logs in based on the account.

The login may be login based on a registered user account, or may be registering first and then logging in.

12: The vehicle checks whether the login is successful.

13: If the login is successful, the cockpit user center binds user10 to the account of the user, that is, allocates the created user10 to the user.

14: The cockpit user center invokes userController to create a new user space, uses the user space as a guest space of the central display, and starts the guest space. The user space may be denoted as, for example, user100. The cockpit user center may associate and store a screen identifier (ID) of the central display and an ID of user100.

After the guest space user100 of the central display is created, the vehicle may install, in user100, pre-installed applications within the permission scope of the central display, for example, some pre-installed system applications and third-party applications. Installation packages of these applications may be pre-installed in the vehicle.

After the guest space is created, the guest space is started, so that a speed of switching from a user space of a natural person user to the guest space on the central display subsequently can be accelerated.

15: If the login fails, the cockpit user center marks user10 as the guest space of the central display.

Step 16 may be performed after step 14 or step 15.

16: The cockpit user center queries screen information in the vehicle.

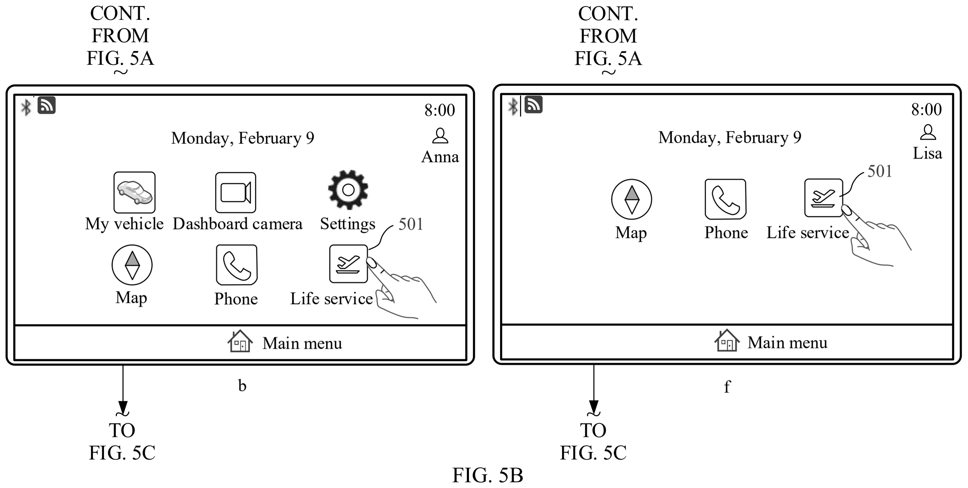

17: If there is another screen, after an OOBE guidance procedure on the central display ends, display a home screen provided by user10 on the central display, and indicate that a screen other than the central display queried by the cockpit user center is on. A user interface b in FIG. 5B is an example of a home screen displayed on the central display after the login is successful in step 15.

18: The DMS determines whether there is a passenger screen.

19: If there is the passenger screen, a cockpit user center invokes userController to create a new user space, and uses the user space as a guest space of the passenger screen. The user space may be denoted as, for example, user200. The cockpit user center may associate and store a screen identifier (ID) of the passenger screen and an ID of user200.

After the guest space user200 of the passenger screen is created, the vehicle may install, in user200, pre-installed applications within a permission scope of the passenger screen, for example, some pre-installed third-party applications. Installation packages of these applications may be pre-installed in the vehicle.

20: userController notifies each system service that user200 has been started.

21: userController notifies each observer (observer) that user200 has been switched to the foreground of the passenger screen.

22: userController sends a userSwitchedToDisplay broadcast, where the broadcast indicates that user200 has been switched to the foreground of the passenger screen.

23: The passenger screen starts OOBE, and after the OOBE determines that a current screen is the passenger screen, the passenger screen first skips displaying a home screen.

That the passenger screen first skips displaying the home screen may be implemented in the following several manners: first displaying a pure black page or a page close to pure black on the passenger screen, or first not powering on the passenger screen. A user interface e at an upper right corner in FIG. 5A to FIG. 5D is an example of the pure black page displayed on the passenger screen.

24: After an OOBE guidance procedure on the passenger screen ends, if the passenger screen receives a screen-on notification from the cockpit user center, the passenger screen displays, on the passenger screen, a home screen provided by user200. In this way, it can be ensured that the passenger screen and the primary screen almost simultaneously display the home screens or the passenger screen displays the home screen later than the central display, to prevent the passenger screen from entering the home screen before the central display. A user interface f in FIG. 5B is an example of the home screen displayed on the passenger screen.

If the vehicle further includes one or more rear screens, steps similar to steps 18 to 24 may be further performed, to create guest spaces respectively corresponding to the one or more rear screens.

According to the vehicle power-on procedure shown in FIG. 4A and FIG. 4B, the vehicle may create guest spaces (user100 and user200) respectively corresponding to the screens, and further create a user space (user10) of a natural person user via the central display. Subsequently, data included in each created user space may also be updated with a user operation, for example, more applications are installed, or some applications are deleted.

Same applications may be installed in a plurality of user spaces created by the electronic device, and the same applications may be installed based on a same application installation package. Therefore, in the method provided in this application, applications do not need to be additionally customized for different user spaces.

When the vehicle is powered on for the first time, the central display first displays the user interface for guiding the user to log in, and the passenger screen does not display the home screen. Therefore, when the vehicle is powered on for the first time, the user space of the natural person user can be created only via the central display, and the user space of the natural person user cannot be created via another secondary screen. The foregoing is to ensure that only the OOBE running on the central display is controlled by the natural person when the vehicle is powered on for the first time, and the OOBE running on the secondary screen is not controlled by the natural person, so as to ensure data security of the vehicle.

According to the first power-on procedure shown in FIG. 4A and FIG. 4B, if a determining result in step 12 is yes, the foreground user space of the central display is user10, and if the vehicle includes the passenger screen, the foreground user space of the passenger screen is the guest space user200.

In addition to creating the user space of the natural person user in the first power-on procedure shown in FIG. 4A and FIG. 4B, the user space of the natural person user may alternatively be created in a subsequent power-on or running process. When the user space of the natural person user is subsequently created, the user may enter an account, and create a new user space for the user. A sequence of the two is not limited. Alternatively, an existing guest space may be occupied to update the existing guest space to the user space of the user, and then a new guest space is to be created. After the vehicle is powered on for the first time, the screens of the vehicle may be separately powered on. The vehicle may create the user space via the central display, or may create the user space via the secondary screen. This is not limited in this application.

Independent use of a plurality of screens

In this application, one screen can access only one user space at a same time, and two screens cannot access one user space at the same time. In other words, one screen has only one foreground user space at most, and one user space can be accessed by only one screen at a time.

In this application, a data structure DisplayTopUserMap may be newly added, to manage a mapping relationship between each screen and a foreground user space. The data structure may associate and store an ID of a screen and an ID of a foreground user space of the screen.

The electronic device may run different user spaces on different screens. For example, the electronic device runs a first user space in the foreground of a first screen, and runs a second user space in the foreground of a second screen. In other words, DisplayTopUser of the first screen is the first user space, and DisplayTopUser of the second screen is the second user space.

The first screen is different from the second screen. For example, the first screen may be the central display of the vehicle, and the second screen may be the passenger screen, or vice versa.

The first user space is different from the second user space. The first user space may be a user space of a natural person user, or may be a guest space of the first screen. The second user space may be a user space of a natural person user, or may be a guest space of the second screen. This application provides a concept of a foreground user space of a screen. Each screen corresponds to one foreground user space. Therefore, the first screen and the second screen each may each have one foreground user space, and the two foreground user spaces are different.

The following provides descriptions in different cases.
1. Both the first user space and the second user space are user spaces of natural persons. For example, the first user space is user10, and the second user space is user11.

The electronic device may display, on the first screen, the interface for guiding the user to log in, and indicate the user to enter the account. After obtaining the account entered by the user, the electronic device checks whether there is a user space corresponding to the account. If there is the user space, the electronic device accesses the user space. For a login manner, refer to related descriptions in step 10 in FIG. 4B. A manner in which the electronic device accesses the second user space on the second screen is similar to a manner in which the electronic device accesses the first user space on the first screen. Details are not described herein again.

2. The first user space is the guest space of the first screen, for example, user100; and the second user space is the guest space of the second screen, for example, user200.

If the electronic device does not obtain, via the first screen, the account entered by the user, or does not find a user space corresponding to the account, the electronic device may access the guest space of the first screen on the first screen. Similarly, if the electronic device does not obtain, via the second screen, the account entered by the user, or does not find a user space corresponding to the account, the electronic device may access the guest space of the second screen on the second screen.

3. The first user space is a user space of a natural person user, and the second user space is the guest space of the second screen. For example, the first user space is user10, and the second user space is user200.

4. The first user space is the guest space of the first screen, and the second user space is a user space of a natural person user. For example, the first user space is user100, and the second user space is user11.

The first screen runs the first user space in the foreground, the second screen runs the second user space in the foreground, and the two user spaces are naturally isolated. Therefore, the user may independently use the two screens based on the two isolated user spaces without interfering with each other, and generated user data may also be isolated from each other. Specifically, one user may input various operations such as sliding and tapping on the first screen, and may further start an application in the first user space, close a started application, use a function of an application in the first user space, and the like by using the first screen; and the other user may also input various operations such as sliding and tapping on the second screen, or start an application in the second user space, close a started application, use a function of an application in the second user space, and the like by using the second screen. Operations on the two screens do not affect each other. Data generated when the two users use the screens, such as installed applications, chat records, taken photos, and historical browsing records, may be stored in respective user spaces and isolated from each other. The following describes independent use of the two screens in three scenarios.

Scenario 1: The electronic device enters different home screens on different screens.

For example, the electronic device displays, on the first screen, a first home screen provided by the first user space, and displays, on the second screen, a second home screen provided by the second user space.

If the first user space is a user space of a natural person, the first home screen may display an icon of an application that is in applications installed in the first user space and that is within a permission scope of the first screen. For example, when the first screen is the central display, icons of all applications in the first user space may be displayed on the first home screen.

Similarly, if the second user space is a user space of a natural person, the second home screen may display an icon of an application that is in applications installed in the second user space and that is within a permission scope of the second screen. For example, when the second screen is the passenger screen, only icons of some applications in the second user space are displayed on the second home screen, and icons of applications related to system management in the user space are not displayed.

If the first user space is the guest space of the first screen, an icon of an application installed in the guest space may be displayed on the first home screen.

Similarly, if the second user space is the guest space of the second screen, an icon of an application installed in the guest space may be displayed on the second home screen.

If the electronic device is powered on for the first time, for a procedure in which the two screens separately display home screens in Example 1, refer to step 17 and step 24 in FIG. 4B.

FIG. 5A to FIG. 5D show an example of the first home screen and the second home screen. The user interface b in FIG. 5B is an example of the first home screen, and the user interface f is an example of the second home screen. Icons of applications displayed on the two home screens are different, but both home screens include a same icon 501 of a first application. The first application may be a system application or a third-party application.

Scenario 2: The electronic device runs a same application on different screens.

The electronic device may start, through an entry like a home screen, a control center interface, or a drop-down notification bar displayed on the screen, an application in a user space that runs in the foreground of the screen.

For example, the electronic device receives a user operation on the icon of the first application displayed on the first home screen, and starts the first application in the first user space; and the electronic device receives a user operation on the icon of the first application displayed on the second home screen, and starts the first application in the second user space.

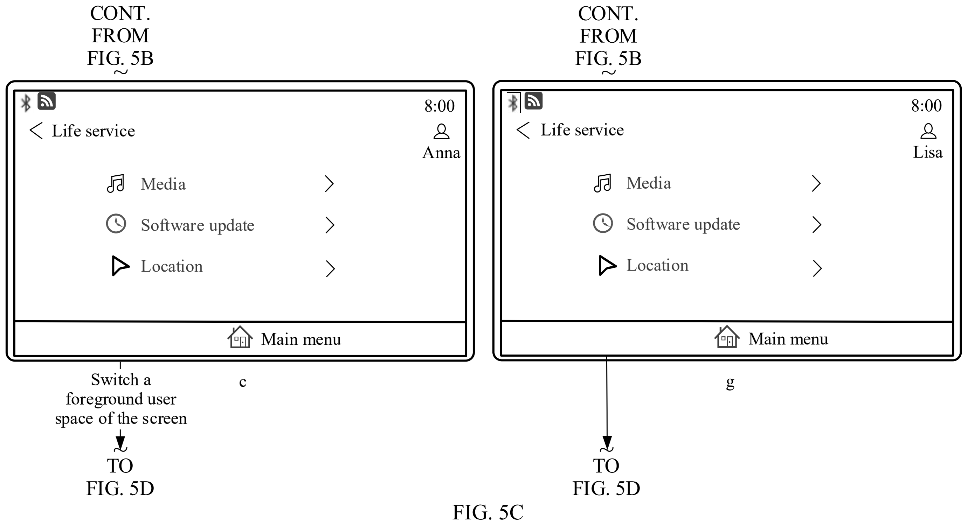

Both the first application in the first user space and the first application in the second user space are installed based on a same application installation package in the electronic device. The two applications have a same package name, and may further have a same application icon and application name. A difference lies in that one application is installed in the first user space, the other is installed in the second user space. In this way, different users may use a same application on different screens, with no interference with each other. FIG. 5A to FIG. 5D further show user interfaces displayed when a same application is started on two screens. The first application may be a system application or a third-party application. Refer to c and g in FIG. 5C. The same application may be started on both the first screen and the second screen.

In some implementations, if the first screen and the second screen are respectively the primary screen and the secondary screen, functions provided by the first application on the first screen and the first application on the second screen may be different. For example, the electronic device may display, on the first screen, the user interface provided by the first application, where the user interface supports all functions of the first application; and the electronic device may display, on the second screen, the user interface provided by the first application, where the user interface supports only some functions of the first application. In this way, in consideration of a difference between the primary screen and the secondary screen, permissions of a same application on the two screens are distinguished, and the permission of the primary screen is higher than the permission of the secondary screen.

Scenario 3: The electronic device runs different applications on different screens.

For example, the electronic device receives a user operation on the icon of the first application displayed on the first home screen, and starts the first application in the first user space; and the electronic device receives a user operation on an icon of a second application displayed on the second home screen, and starts the second application in the second user space. In this way, different users can use different applications on different screens.

### Switch a user space

In a process of using the electronic device, there are a plurality of user space switching scenarios. The following describes the scenarios one by one.

Scenario 1: The electronic device switches the first user space running in the foreground of the first screen to the background, switches a third user space to the foreground of the first screen for running, and continuously runs the second user space in the foreground of the second screen.

The electronic device may receive, on the first screen, a user operation used to switch the foreground user space, and access, based on an account newly entered by the user, the third user space corresponding to the new account. In this way, the first user space is switched from the foreground of the first screen to the background, and the third user space is switched to the foreground of the first screen.

Each of the two screens corresponds to one foreground user space, and there is no mounting relationship or a similar relationship between the foreground user spaces of the two screens. Therefore, when the electronic device switches the foreground user space of the first screen, the foreground user space of the second screen is not affected. In this process, the foreground user space (namely, the second user space) of the second screen may continuously run, and the second screen may continuously display an original user interface.

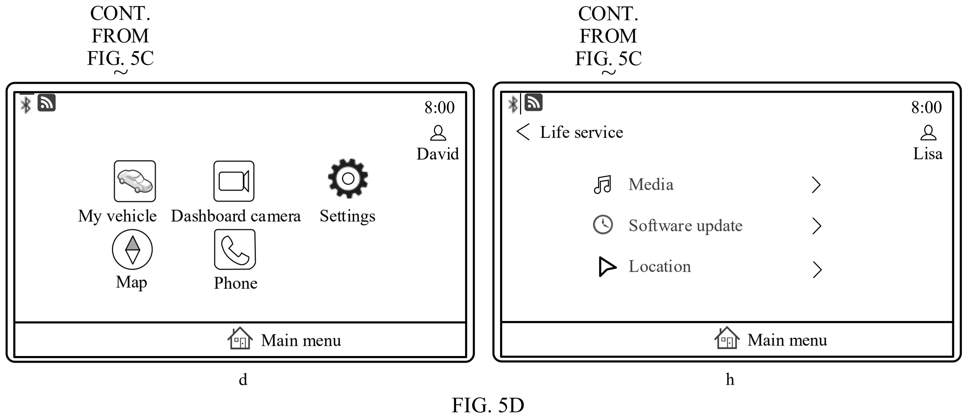

A user interface d in FIG. 5D shows an example of a home screen displayed on the first screen after the electronic device switches the foreground user space of the first screen to the third user space. In addition, a user interface h shows the original user interface continuously displayed on the second screen at a same time.

Scenario 2: The electronic device switches the first user space to the foreground of the second screen for running.

The electronic device may receive, on the second screen, a user operation used to switch the foreground user space, and access the first user space on the second screen based on an account that corresponds to the first user space and that is entered by the user. In this way, the first user space is switched from the foreground of the first screen to the foreground of the second screen, and the second user space is switched to the background of the second screen.

In addition, the first screen may enter the guest space. Alternatively, the first screen switches the second user space to the foreground for running, that is, the foreground user space of the first screen is exchanged with the foreground user space of the second screen. Alternatively, the user logs in to a user space of another natural person user on the first screen.

After the electronic device switches the first user space to the foreground of the second screen for running, the home screen of the second screen may display an icon of an application that is in the applications installed in the first user space and that is within the permission scope of the second screen, and support an application function within the permission scope of the second screen. For example, if the first screen and the second screen are respectively the primary screen and the secondary screen, before the switching, the first screen may display icons of all applications in the first user space, to support all functions of these applications. After the switching, the second screen can display icons of only some applications in the first user space, and support only some functions of these applications.

### Interface example

### getDisplayTypeByUser interface

This interface is used to obtain a screen type. A complete version of the interface is DisplayTypeByUser (int userId). The parameter displayId in the brackets indicates an ID of a current user space. This interface is used to obtain a type of a screen on which the current user space is located.

In a process of using the electronic device, different screens have different permissions. Therefore, content of a same user space that can be accessed on different screens and content of a same application on different screens may be different. After the screen type is obtained through this interface, a related module may determine a permission scope of the current screen and provide a service within the permission scope.

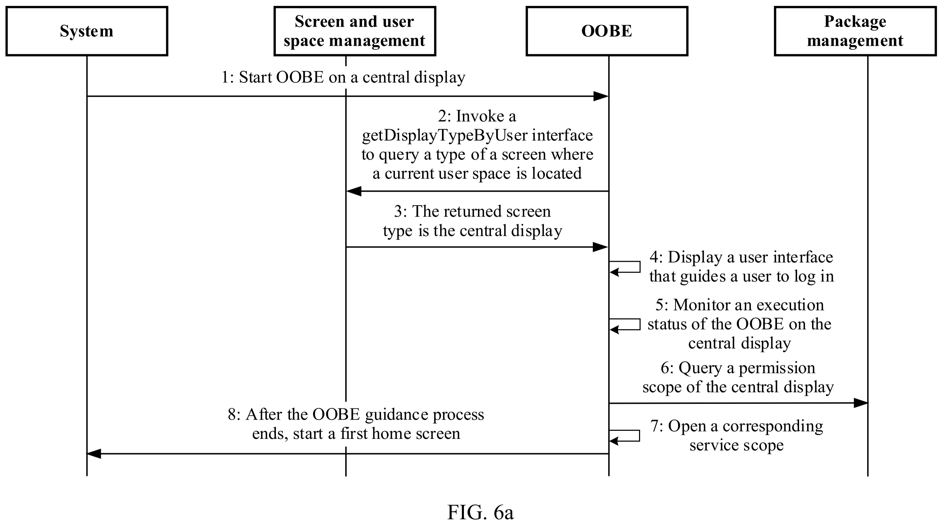

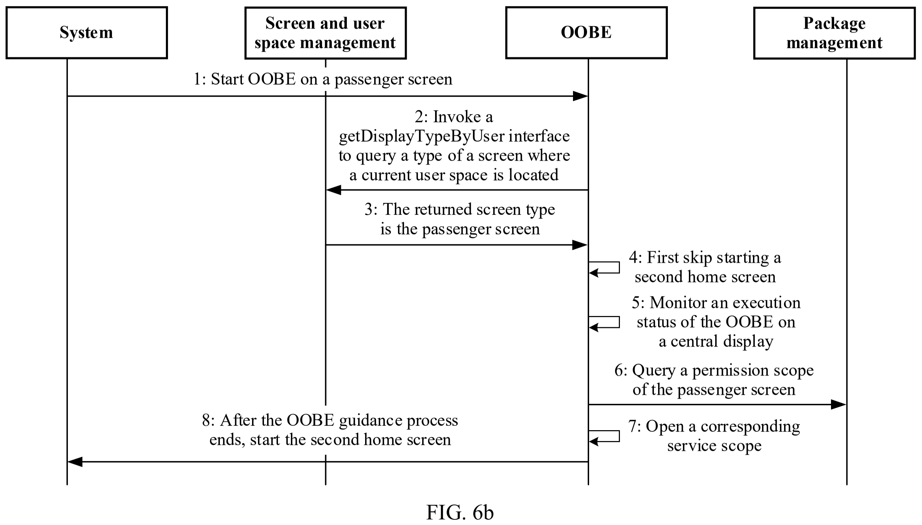

FIG. 6a and FIG. 6b show a procedure of displaying a home screen on a central display and a procedure of displaying a home screen on a passenger screen when a vehicle is powered on for the first time.

FIG. 6a shows a procedure of displaying the home screen on the central display when the vehicle is powered on for the first time. The procedure may include the following steps:
1: A system starts OOBE on the central display.
2: The OOBE invokes a getDisplayTypeByUser interface to query, from a screen and user space management module based on an ID of a user space where the OOBE currently runs, a screen type of a screen on which the user space is currently located.
3: The screen and user space management module returns a query result of the screen type to the OOBE, where the query result indicates that the user space where the OOBE currently runs is the central display.
4: After learning that the screen on which the OOBE is located is the central display, the OOBE displays a user interface for guiding a user to log in. Refer to step 10 in FIG. 4B.
5: Monitor an execution status of the OOBE on the central display.
6: Query a permission scope of the current screen (namely, the central display) from a package management module.
7: Open a corresponding service scope based on the queried permission scope.
8: After it is detected that an OOBE guidance procedure ends, start a first home screen, where the started first home screen includes only an icon of an application within the permission scope.

FIG. 6b is a procedure of displaying the home screen on the passenger screen when the vehicle is powered on for the first time. The procedure may include the following steps:
1: A system starts OOBE on the passenger screen.
2: The OOBE invokes a getDisplayTypeByUser interface to query, from a screen and user space management module based on an ID of a user space where the OOBE currently runs, a screen type of a screen on which the user space is currently located.
3: The screen and user space management module returns a query result of the screen type to the OOBE, where the query result indicates that the user space where the OOBE currently runs is the passenger screen.
4: After learning that the screen on which the OOBE is located is the passenger screen, the OOBE first skips starting a second home screen. Refer to step 23 in FIG. 4B.
5: Monitor an execution status of the OOBE.
6: Query a permission scope of the current screen (namely, the passenger screen) from a package management module. The permission scope of the current screen may include an application provided by the current user space on the current screen, or a function provided by a first application in the current user space on the current screen.
7: Open a corresponding service scope based on the queried permission scope.
8: After it is detected that an OOBE guidance procedure ends, start the second home screen, where the started second home screen includes only an icon of an application within the permission scope.

This is not limited to different pages and home screens displayed by the OOBE on different screens when the vehicle is powered on shown in FIG. 6a and FIG. 6b. When some applications are specifically used, permission scopes of a same application on different screens may also be different. Therefore, when an application is run on each screen, the getDisplayTypeByUser interface may also be used to determine a current screen type, so as to determine a permission scope.

### isDisplayTopUser interface

The interface is used to determine whether a user space is a foreground user space of a screen. A complete version of the interface is isDisplayTopUser (int userId). The parameter userId in the brackets indicates an ID of a user space. The interface is used to determine whether the user space is the foreground user space of the screen. The screen herein may be any screen included in the electronic device.

The foregoing describes a process in which the first screen and the second screen in the electronic device are independently used, including a process in which the electronic device separately displays home screens and separately starts applications on the two screens, and the like. Implementation of the processes depends on the concept of the foreground user space of the screen provided in this application, and the isDisplayTopUser interface needs to be used.

The following describes functions of the interface in two scenarios: starting an application and drawing a window.

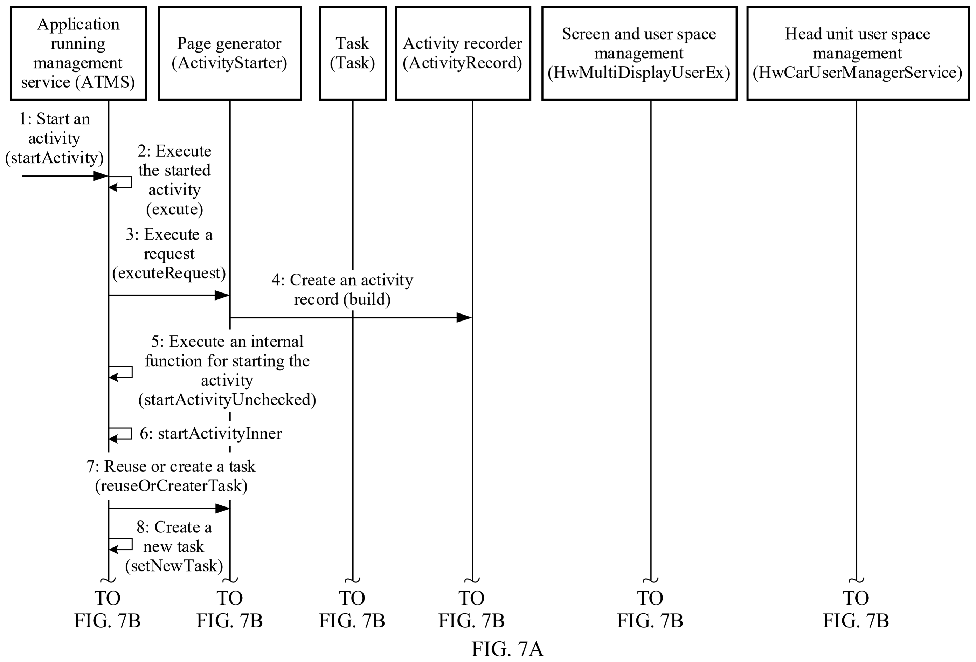

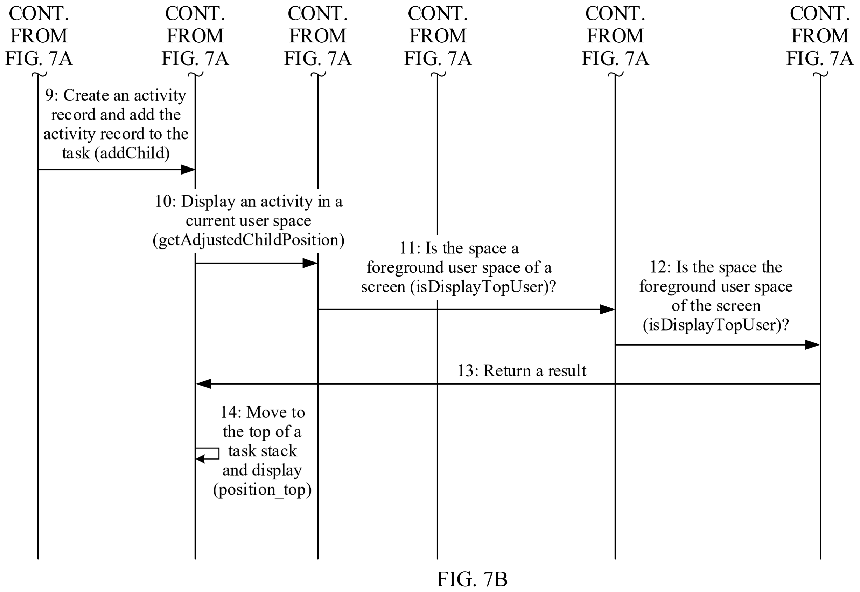

FIG. 7A and FIG. 7B show a procedure in which the electronic device creates an activity (activity). The electronic device may respond to an operation of tapping an icon of an application on a home screen, and the application on the home screen invokes an ATMS interface at an application framework layer to create an activity, or the application may create an activity in a process of running the application.

As shown in FIG. 7A and FIG. 7B, the electronic device first creates an activity record (ActivityRecord), then creates a task, and pushes ActivityRecord into the task. Then, an incubation process is entered and application lifecycle management is triggered. In an Android native design, before the activity is started, the task determines whether a current user space is a foreground user space (currentUser) of the entire device. For an activity that is not specified to be visible to all user spaces, if the current user space is not currentUser, it is disallowed to start the activity. In this application, whether the current user space is currentUser is first determined. If the current user space is currentUser, the activity is started. If the current user space is not currentUser, a step of invoking the isDisplayTopUser interface is added to determine whether the current user space is a foreground user space of a screen. If the current user space is the foreground user space of the screen, the activity is started. The screen herein may be any screen in the electronic device. The activity may be started provided that it is determined that the current user space is a foreground user space of any screen. HwCarUserManagerSevice in FIG. 7A and FIG. 7B is a decoupling implementation of a cockpit product by a user space management service (UserManagerService).

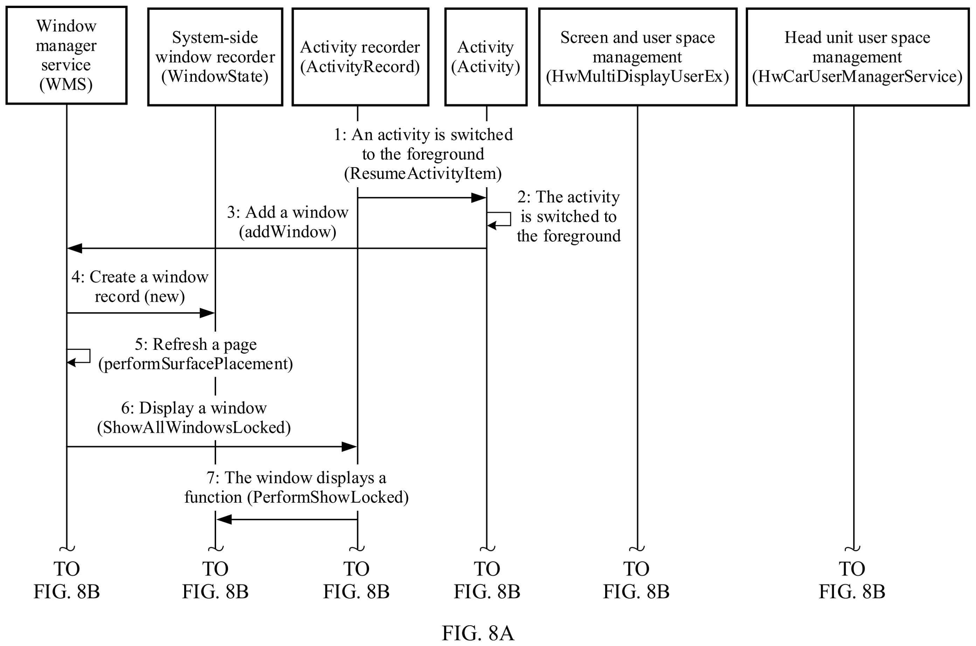

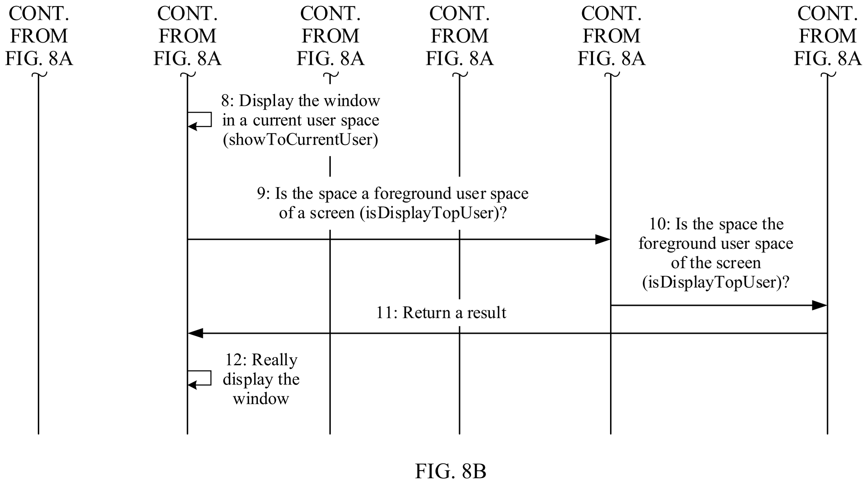

FIG. 8A and FIG. 8B show a procedure in which the electronic device draws a window. The electronic device may respond to an operation of tapping an icon of an application on a home screen, and the application on the home screen invokes the application framework layer to add a main window (MainWindow), or an application running on the electronic device may actively invoke a window adding interface (addWindow interface).

As shown in FIG. 8A and FIG. 8B, after the activity is started, life cycle resume (resume) is triggered, and then the activity invokes a WMS to create a window state (WindowState). In the Android native design, before the window is drawn, whether a current user space is a foreground user space (currentUser) of the entire device is first determined. For a window that is not specified to be visible to all user spaces, if the current user space is not currentUser, it is disallowed to draw the window . In this application, whether the current user space is currentUser is first determined. If the current user space is currentUser, the window is drawn. If the current user space is not currentUser, a step of invoking the isDisplayTopUser interface is added to determine whether the current user space is a foreground user space of a current screen. If the current user space is the foreground user space of the current screen, it is allowed to draw the window.

It can be learned from the procedures shown in FIG. 7A and FIG. 7B and FIG. 8A and FIG. 8B that, when it is determined whether the current user space is currentUser, if the current user space is not currentUser, a subsequent procedure (for example, starting an activity or drawing a window) should be rejected. In this application, a concept of the foreground user space of the screen is newly added, in this case, whether the current user space is the foreground user space of the current screen may be further determined when the current user space is not currentUser. If the current user space is the foreground user space of the current screen, the subsequent procedure may still be performed.

It can be learned from FIG. 7A and FIG. 7B and FIG. 8A and FIG. 8B that, in this application, different user spaces are started on two screens, and the concept of the foreground user space of the screen is newly added to each screen. In this way, the foreground user space on the secondary screen can normally start an application and draw a window, without mounting a user space of a secondary screen to currentUser of a primary screen.

### SwapUsersBetweenDisplay interface, currentUser switch interface, and switchUserToDisplay interface

The foregoing three interfaces are used to switch a user space.

The swapUsersBetweenDisplay interface is used to exchange foreground user spaces of two screens. A complete version of the interface is swapUsersBetweenDisplay (final int userId1, final int userId2, final int displayId1, final int displayId2), where four parameters are included in the brackets. displayId1 and displayId2 are IDs of the two screens to be exchanged. userId1 indicates an ID of a foreground user space of the screen displayId1 after the exchange, and userId2 indicates an ID of a foreground user space of the screen displayId2 after the exchange.

The currentUser switch interface is used to switch a foreground user space of a main screen.

The switchUserToDisplay interface is used to switch a foreground user space of a secondary screen. A complete version of the interface is switchUserToDisplay (final int targetUserId, final int targetDisplayId), where two parameters are included in the brackets. targetUserId and targetDisplayId respectively indicate a foreground user space and an ID of the secondary screen after the switchover.

The currentUser switch interface is an Android native interface, and the swapUsersBetweenDisplay interface and the switchUserToDisplay interface are newly added interfaces in this application.

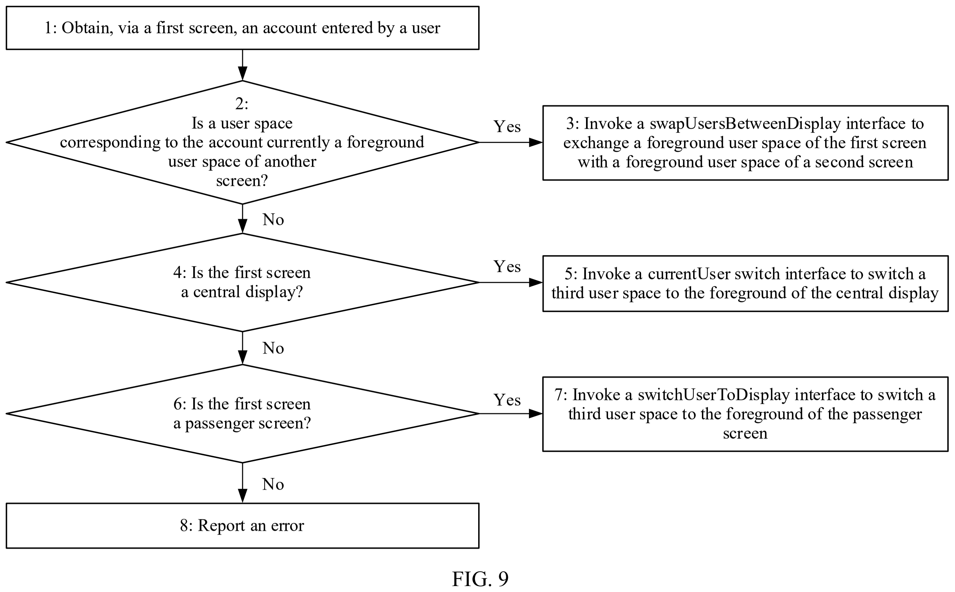

FIG. 9 shows an example of a procedure in which a vehicle switches a user space. The procedure is performed by a cockpit user center. The vehicle that executes the procedure includes a first screen and a second screen. The first screen runs a first user space in the foreground, and the second screen runs a third user space in the foreground. The first screen and the second screen are respectively a central display and a passenger screen, or vice versa.

As shown in FIG. 9, the procedure may include the following steps.
1: Obtain, via the first screen, an account entered by a user.
2: Detect whether a user space corresponding to the account is currently a foreground user space of another screen.
   If yes, for example, the account corresponds to a second user space, step 3 is performed; or if no, for example, the account corresponds to the third user space, step 4 is performed.
3: Invoke a swapUsersBetweenDisplay interface to exchange a foreground user space of the first screen with a foreground user space of the second screen.
4: Determine whether the first screen is the central display.
   If yes, step 5 is performed; or if no, step 6 is performed.
5: Invoke a currentUser switch interface to switch the third user space to the foreground of the central display.
6: Determine whether the first screen is the passenger screen.
   If yes, step 7 is performed; or if no, step 8 is performed.
7: Invoke a switchUserToDisplay interface to switch the third user space to the foreground of the passenger screen.
8: Report an error.

Certainly, if the vehicle still has a rear screen, after step 7, whether the first screen is the rear screen may be further determined. If the first screen is the rear screen, the switchUserToDisplay interface is invoked to switch the third user space to the foreground of the rear screen.

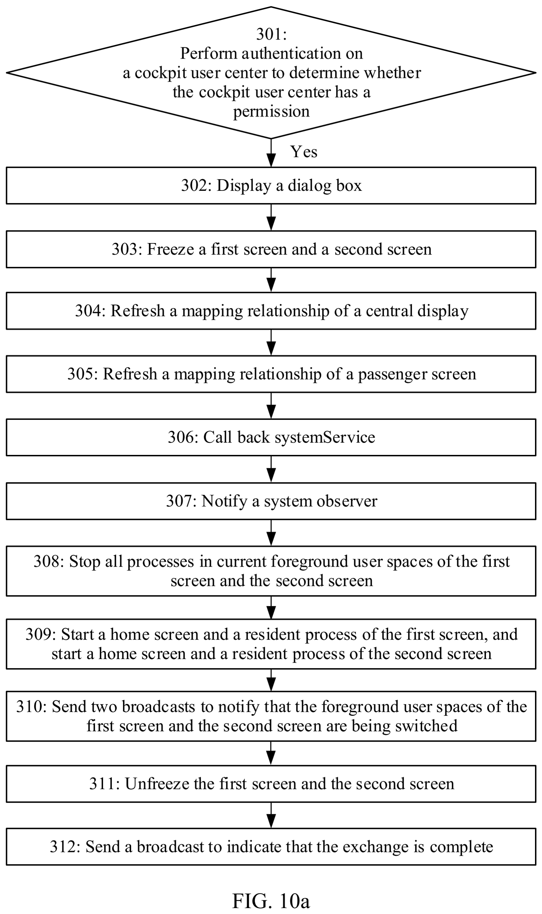

Refer to FIG. 10a. When the cockpit user center invokes the swapUsersBetweenDisplay interface in step 3 in FIG. 9, a procedure of exchanging the foreground user spaces is specifically performed by a framework layer, and may include the following steps.
301: Perform authentication on the cockpit user center to determine whether the cockpit user center has a permission to exchange the foreground user spaces.
302: If the cockpit user center has the permission to exchange the foreground user spaces, invoke the first screen to display a dialog box, where the dialog box is used to notify the user that a logged-in-to account on the first screen and a logged-in-to account on the second screen are to be switched. In some implementations, the second screen may be further invoked to display a similar dialog box.
303: Perform a screen freezing operation on the first screen and the second screen. Screen freezing refers to making content displayed on a screen unchanged. A timeout period may be set for screen freezing, for example, 3s. This step can avoid black screen during the exchange.
304: Refresh a mapping relationship of the central display, and mark currentUser (that is, a foreground user space of the central display) of the entire device as the second user space.
305: Refresh a mapping relationship of the passenger screen, and mark a foreground user space of the passenger screen as the first user space.
306: Call back systemService through an onUsersSwapingBetweenDisplay interface to indicate that the foreground user space of the first screen is exchanged with the foreground user space of the second screen.
307: A UsersSwapbetweenDisplayObserver interface is used to notify a system observer that the foreground user space of the first screen is exchanged with the foreground user space of the second screen.
308: Stop all processes in current foreground user spaces of the first screen and the second screen.
309: In the foreground user space of the first screen after the exchange, start a home screen and a resident process of the first screen; and in the foreground user space of the second screen after the exchange, start a home screen and a resident process of the second screen.

A reason for performing steps 308 and 309 is that sizes of the two screens may be different, and an existing process is stopped and then restarted, to create a process based on an attribute of a switched screen, so that display can be optimized.
310: Send two ACTION_USERS_ SWITHED_TO_DISPLAY broadcasts, where the two broadcasts may respectively carry a screen ID of the first screen and a screen ID of the second screen, to notify each observer and service that the foreground user space of the first screen and the foreground user space of the second screen are being switched.
311: If the first screen completes home screen drawing, or a callback of the system observer is received, or screen freezing times out, an unfreezing operation is performed on the first screen; and the same operation is performed on the second screen.
312: After both the first screen and the second screen are unfrozen, a broadcast is sent to notify each observer and service that the user space of the first screen and the user space of the second screen have been exchanged.

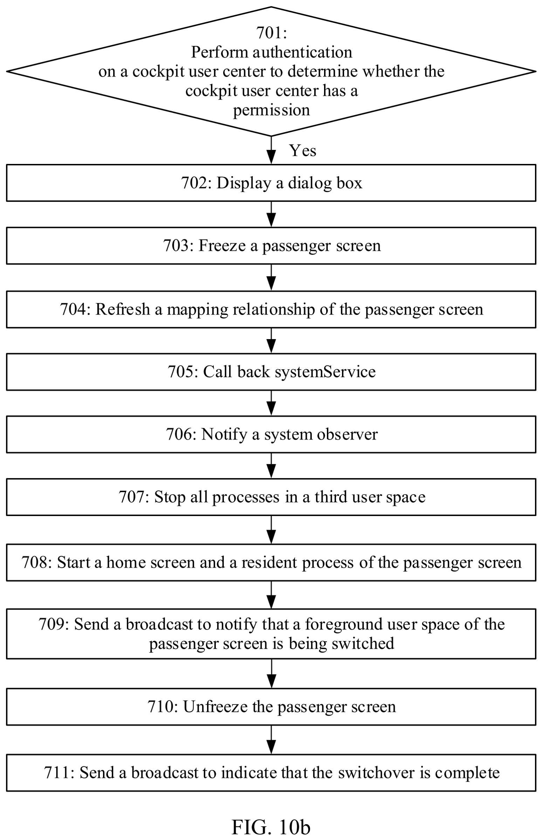

Refer to FIG. 10b. When the cockpit user center invokes the switchUserToDisplay interface in step 7 in FIG. 9, a procedure of switching the foreground user space of the passenger screen is specifically performed by the framework layer, and may include the following steps.
701: Perform authentication on the cockpit user center to determine whether the cockpit user center has a permission to switch the foreground user space of the secondary screen.
702: If the cockpit user center has the permission to switch the foreground user space of the secondary screen, invoke the passenger screen to display a dialog box, where the dialog box is used to notify the user that a logged-in-to account on the passenger screen is to be switched.
703: Perform a screen freezing operation on the passenger screen. A timeout period may be set for screen freezing, for example, 3s. This step can avoid black screen during the switchover.
704: Refresh a mapping relationship of the passenger screen, and mark the foreground user space of the passenger screen as the third user space.
705: Call back systemService through the onUsersSwapingBetweenDisplay interface to indicate that the foreground user space of the passenger screen is switched.
706: The UsersSwapbetweenDisplayObserver interface is used to notify the system observer that the foreground user space of the passenger screen is switched.
707: Stop all processes in the third user space.
708: Start a home screen and a resident process of the passenger screen in the third user space.
709: Invoke an ACTION_USERS_ SWITHED_TO_DISPLAY broadcast, where the broadcast may carry a screen ID of the passenger screen, to notify each observer and service that the foreground user space of the passenger screen is being switched.
710: If the passenger screen completes home screen drawing, or a callback of the system observer is received, or screen freezing times out, an unfreezing operation is performed on the passenger screen.
711: Send a broadcast to notify each observer and service that the foreground user space of the passenger screen has been switched.

### StartUserToDisplay interface

This interface is used to start a target user space to the foreground of the screen for running, and unlock a locked (locked) state of the user space. After the user space is unlocked, the user space can be accessed. This interface can be used in scenarios such as starting a user space on a screen or switching a user space on a screen.

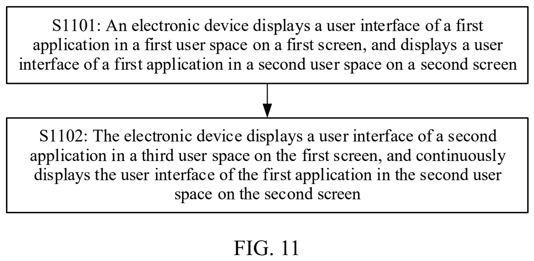

FIG. 11 shows a procedure of a method for using a multi-screen electronic device according to an embodiment of this application.

The method is applied to an electronic device including a first screen and a second screen. The first screen and the second screen are different screens. The first screen may be a primary screen, and the second screen may be a secondary screen. For example, the first screen may be a central display of a vehicle, and the second screen may be a passenger screen or a rear screen of the vehicle, or vice versa.

As shown in FIG. 11, the method may include the following steps.

S1101: An electronic device displays a user interface of a first application in a first user space on the first screen, and displays a user interface of a first application in a second user space on the second screen.

The first user space is different from the second user space. The first user space may be a user space of a natural person user, or may be a guest space of the first screen. The second user space may be a user space of a natural person user, or may be a guest space of the second screen. When S1101 is performed, a foreground user space of the first screen is the first user space, and a foreground user space of the second screen is the second user space.

Before performing S1101, the electronic device may first create the first user space and the second user space. For a process in which the electronic device creates the user space, refer to related descriptions in FIG. 4A and FIG. 4B.

In some implementations, the electronic device logs in to a first account on the first screen, and then displays the user interface of the first application in the first user space on the first screen; and logs in to a second account on the second screen, and then displays the user interface of the first application in the second user space on the second screen. The first account is an account corresponding to the first user space, and the second account is an account corresponding to the second user space.

The first application may be a system application or a third-party application. Both the first application in the first user space and the first application in the second user space are installed based on a same application installation package in the electronic device. The first application in the first user space and the first application in the second user space have a same package name, and may further have a same application icon and a same application name.

In some implementations, the electronic device includes one processing chip, and the first user space, the second user space, and a third user space run on the processing chip. Both the first screen and the second screen may be connected to the processing chip.

In some implementations, before performing S1101, the electronic device may first receive a power-on operation, skip displaying a second home screen on the second screen, then display a first home screen on the first screen, and display the second home screen on the second screen. An application corresponding to an application icon displayed on the first home screen is installed in the first user space, and an application corresponding to an application icon displayed on the second home screen is installed in the second user space. For a specific implementation of displaying content on each screen after the electronic device is powered on, refer to related descriptions in FIG. 4A and FIG. 4B, FIG. 5A to FIG. 5D, and FIG. 6a and FIG. 6b.

In some implementations, before performing S1101, the electronic device may further store a correspondence between the first screen and the first user space, and store a correspondence between the second screen and the second user space. For example, the electronic device may associate and store, in a data structure DisplayTopUserMap, an ID of the first screen and an ID of the first user space, and an ID of the second screen and an ID of the second user space.

In some implementations, before performing S1101, the electronic device may first determine a screen type of the first screen on which the first user space is located, and then determine, based on the screen type of the first screen, an application provided by the first user space on the first screen or determine a function provided by the first application in the first user space on the first screen. In some implementations, the electronic device may determine, by invoking a getDisplayTypeByUser interface, the screen type of the first screen on which the first user space is located. For details, refer to the foregoing related descriptions of the getDisplayTypeByUser interface in FIG. 6a and FIG. 6b.

In some implementations, before performing S1101, the electronic device may first determine whether the first user space is the foreground user space of the first screen, and if yes, start an activity of the first application in the first user space, and draw a window of the first application. In some implementations, the electronic device may determine, by invoking an isDisplayTopUser interface, whether the first user space is the foreground user space of the first screen. For details, refer to the foregoing related descriptions of the isDisplayTopUser interface in FIG. 7A and FIG. 7B and FIG. 8A and FIG. 8B.

In S1101, different users may use a same application on different screens, with no interference with each other.

S1102: The electronic device displays a user interface of a second application in the third user space on the first screen, and continuously displays the user interface of the first application in the second user space on the second screen.

After S1102 is performed, the foreground user space of the first screen is switched from the first user space to the third user space. The third user space is different from both the first user space and the second user space.

In S1102, because the two screens each correspond to one foreground user space, when the electronic device switches the foreground user space of the first screen, the foreground user space of the second screen is not affected. In this process, the foreground user space (namely, the second user space) of the second screen may continuously run, and the second screen may continuously display the original user interface.

In some implementations, before performing S1102, the electronic device may switch the foreground user space of the first screen from the first user space to the third user space. In some implementations, the electronic device may switch the foreground user space of the first screen from the first user space to the third user space by invoking a currentUser switch interface. For details, refer to the foregoing related descriptions of the currentUser switch interface in FIG. 9.

In some implementations, before performing S1102, the electronic device may switch the logged-in-to account on the first screen from the first account to a third account.

In some implementations, before performing S1102, the electronic device may further update the correspondence between the first screen and the first user space to a correspondence between the first screen and the third user space. For example, the electronic device may update, in the data structure DisplayTopUserMap, the ID of the first screen and the ID of the first user space that are associated and stored to the ID of the first screen and an ID of the third user space.

Optionally, after S1102, the electronic device may further perform any one of the following steps S1103 to S1105 (not shown in FIG. 11).

S1103: The electronic device displays, on the second screen, a user interface provided by the first user space.

In other words, the electronic device switches the foreground user space of the second screen from the second user space to the first user space.

In some implementations, a quantity of applications provided by the first user space on the second screen is less than a quantity of applications provided by the first user space on the first screen. Herein, refer to the foregoing descriptions of different permission scopes of a same user space on different screens.

In some implementations, the electronic device specifically displays the user interface of the first application in the first user space on the second screen, where functions provided by the first application in the first user space on the second screen are less than functions provided by the first application in the first user space on the first screen. Herein, refer to the foregoing descriptions of different permission scopes of a same user space on different screens.

S1104: The electronic device exchanges the third user space running in the foreground of the first screen with the second user space running in the foreground of the second screen.

In other words, the electronic device displays, on the first screen, the user interface provided by the second user space, and displays, on the second screen, the user interface provided by the third user space.

In some implementations, the electronic device may exchange the foreground user space of the first screen with the foreground user space of the second screen by invoking a swapUsersBetweenDisplay interface. For details, refer to the foregoing descriptions of the swapUsersBetweenDisplay interface in FIG. 9 and FIG. 10a.

S1105: The electronic device switches the foreground user space of the second screen from the second user space to the fourth user space.

In other words, the electronic device displays, on the second screen, a user interface provided by the fourth user space.

In some implementations, the electronic device may switch the foreground user space of the second screen from the second user space to the fourth user space by invoking a switchUserToDisplay interface. For details, refer to the foregoing related descriptions of the switchUserToDisplay interface in FIG. 9 and FIG. 10b.

### Structure of an electronic device

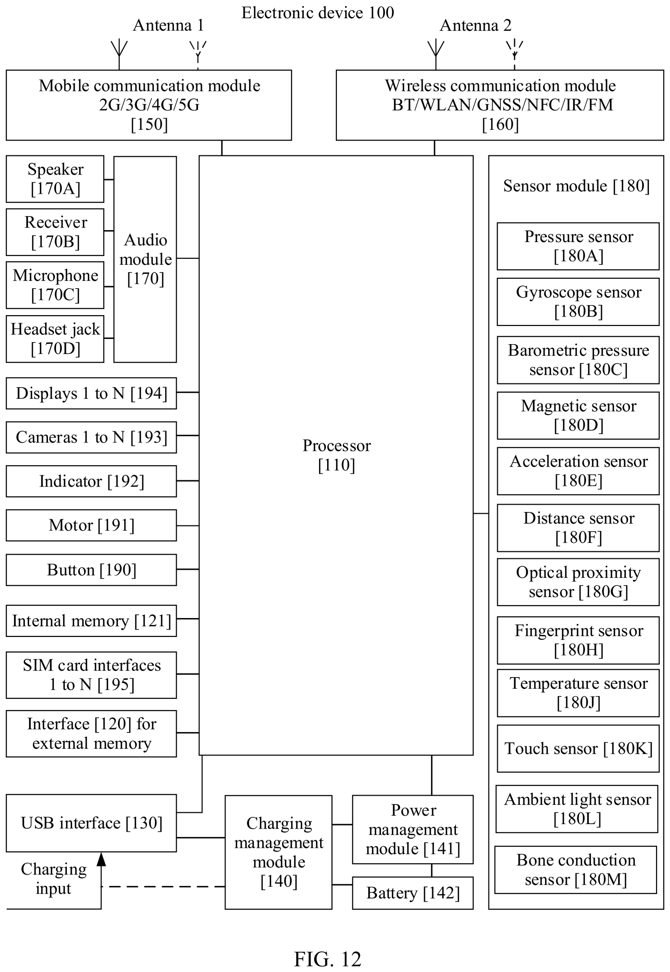

FIG. 12 is a diagram of a hardware structure of an electronic device 100 according to an embodiment of this application. The electronic device 100 may be an electronic device that is provided in embodiments of this application and that is implemented as a non-vehicle form, and is configured to perform steps performed on an electronic device side in the foregoing method.

As shown in FIG. 12, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application constitutes no specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite systems, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). The display panel may alternatively be an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

The electronic device 100 may implement a photographing function through the ISP, the camera 193, the video codec, the GPU, the display 194, the application processor and the like.

The internal memory 121 may include one or more random access memories (random access memory, RAM) and one or more non-volatile memories (non-volatile memory, NVM).

The random access memory may be directly read and written by the processor 110, may be configured to store executable programs (such as machine instructions) of an operating system or another running program, and may also be configured to store data of the user and an application.

The non-volatile memory may also store the executable programs, the data of the user and the application, and the like, and may be loaded into the random access memory in advance, to be directly read and written by the processor 110.

The interface 120 for external memory may be configured to connect to an external non-volatile memory, to expand a storage capability of the electronic device 100. The external non-volatile memory communicates with the processor 110 through the interface 120 for external memory, to implement a data storage function. For example, a file like music or a video is stored in the external nonvolatile memory.

The electronic device 100 may implement an audio function, for example, music playing and recording, through the audio module 170, the speaker 170A, the receiver 170B, the microphone 170C, the headset jack 170D, the application processor, and the like.

In embodiments of this application, there are a plurality of displays 194 of the electronic device 100. The electronic device 100 may include a processor 110, and components in the processor 110 may be integrated into a same chip. The chip is configured to run an operating system of the electronic device 100, and is further configured to run a plurality of user spaces.

In this application, the internal memory 121 may store program instructions used to implement the method for using a multi-screen electronic device provided in this application. The processor 110 is configured to invoke the program instructions, to trigger the electronic device 100 to perform the method for using the multi-screen electronic device. Specifically, the processor 110 is configured to manage each user space provided in this application, including creating a user space, supporting independent use of a plurality of screens based on a concept of a screen-based foreground user space, switching a user space, even deleting a user space, and the like. For details of an operation performed by the processor 110, refer to the foregoing detailed descriptions of the method for using the multi-screen electronic device.

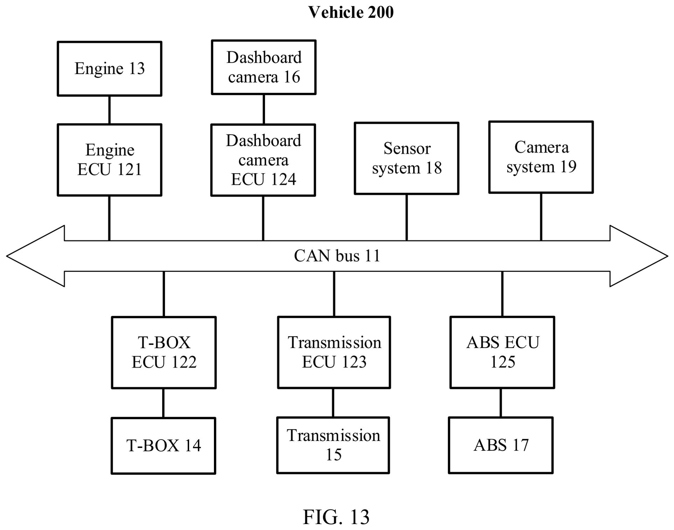

FIG. 13 is a diagram of a hardware structure of a vehicle 200 according to an embodiment of this application. The vehicle 200 may be an electronic device that is provided in embodiments of this application and that is implemented as a vehicle form, and is configured to perform the steps performed by the electronic device side in the foregoing method.

As shown in FIG. 13, the vehicle 200 includes a controller area network (controller area network, CAN) bus 11, a plurality of electronic control units (electronic control unit, ECU), an engine 13, a telematics box (telematics box, T-box) 14, a transmission 15, a dashboard camera 16, an antilock brake system (antilock brake system, ABS) 17, a sensor system 18, a camera system 19, and the like.

The CAN bus 11 is a serial communication network that supports distributed control or real-time control, and is configured to connect components of the vehicle 200. Any component on the CAN bus 11 may monitor all data transmitted on the CAN bus 11. Frames transmitted by the CAN bus 11 may include a data frame, a remote frame, an error frame, and an overload frame, and different frames transmit different types of data. In embodiments of this application, the CAN bus 11 may be configured to transmit data related to each component during traveling of the vehicle 200.

This is not limited to the CAN bus 11. In some other embodiments, the components of the vehicle 200 may alternatively be connected and communicate in another manner. For example, the components may further communicate with each other through a vehicle-mounted Ethernet (Ethernet) local interconnect network (local interconnect network, LIN) bus, a FlexRay bus, a common vehicle-mounted network system (media oriented systems, MOST) bus, or the like. This is not limited in embodiments of this application. The following embodiments are described by using an example in which the components communicate with each other through the CAN bus.

The ECU is equivalent to a processor or a brain of the vehicle 200, and is configured to indicate, based on an instruction obtained from the CAN bus 11 or based on an operation entered by the user, a corresponding component to perform a corresponding action. The ECU may include a security chip, a microprocessor (microcontroller unit, MCU), a random access memory (random access memory, RAM), a read-only memory (read-only memory, ROM), an input/output (I/O) interface, an analog/digital converter (A/D converter), and a large-scale integrated circuit like an input circuit, an output circuit, a shaping circuit, or a drive circuit.

There are various types of ECUs. Different types of ECUs can be used to implement different functions.

The plurality of ECUs in the vehicle 200 may include, for example, an engine ECU 121, a telematics box (telematics box, T-box) ECU 122, a transmission ECU 123, a dashboard camera ECU 124, and an antilock brake system (antilock brake system, ABS) ECU 125.

The engine ECU 121 is configured to manage an engine and coordinate various functions of the engine, for example, may be configured to start up the engine, shut down the engine, and the like. The engine is an apparatus that provides power for the vehicle 200. The engine is a machine that converts a form of energy into mechanical energy. The vehicle 200 may be configured to convert chemical energy from combustion of liquid or gas, or electric energy into mechanical energy, and output power to the outside. Engine components may include two main mechanisms: a crank-link mechanism and a valve mechanism, and five systems: a cooling system, a lubrication system, an ignition system, an energy supply system, and a start-up system. Main components of the engine are a cylinder block, a cylinder head, a piston, a piston pin, a connecting rod, a crankshaft, a flywheel, and the like.

The T-box ECU 122 is configured to manage the T-box 14. In embodiments of this application, the T-box ECU 122 is configured to manage each user space provided in this application, including creating a user space, supporting independent use of a plurality of screens based on a concept of a screen-based foreground user space, switching a user space, even deleting a user space, and the like. For details of an operation performed by the T-box ECU 122, refer to the foregoing detailed descriptions of the method for using the multi-screen electronic device.

The T-box 14 is mainly configured to communicate with the Internet, provide a remote communication interface for the vehicle 200, and provide services including navigation, entertainment, driving data collection, driving route recording, vehicle fault monitoring, remote vehicle query and control (like unlocking and locking, air conditioner control, window control, engine torque limit, engine startup and shutdown, seat adjustment, queries about a state of charge, a fuel level, or a door status), driving behavior analysis, wireless hotspot sharing, road rescue, exception notification, and the like.

The T-Box 14 may be configured to communicate with electronic devices such as a telematics service provider (telematics service provider, TSP) and a mobile phone, and is configured to display and control vehicle information on a user-side electronic device. For example, data such as a vehicle status report, a driving report, fuel consumption statistics, violation query, a location track, and driving behavior may be transmitted to a TSP background system through a network, and the TSP background system forwards the data to the user-side electronic device for viewing by a user.

The T-box 14 may specifically include a communication module and a display.

The communication module may be configured to provide a wireless communication function, and support the vehicle 200 in communicating with another device by using a wireless communication technology such as a WLAN (for example, Wi-Fi), BT, a GNSS, FM, NFC, or IR. The communication module may be further configured to provide a mobile communication function, and support the vehicle 200 in communicating with another device by using communication technologies such as GSM, UMTS, WCDMA, TD-SCDMA, LTE/4G, 5G, and future 6G.

The display is configured to provide a visualized interface for a driver. The vehicle 200 may include one or more displays, for example, may include a vehicle-mounted display disposed beside a seat, and a display that is disposed above the seat and that is configured to display a surrounding situation, and the vehicle 200 may further include a head up display (head up display, HUD) that projects information onto a windshield, and the like. A display that is of the vehicle 200 provided in a subsequent embodiment and that is configured to display a user interface may be a vehicle-mounted display disposed beside a seat, or may be a display disposed above a seat, or may be a HUD, or the like. This is not limited herein.

The T-box 14 may also be referred to as an in-car infotainment system, a remote information processor, a vehicle gateway, or the like. This is not limited in embodiments of this application.

The transmission ECU 123 is configured to manage a transmission.

The transmission 15 may be used to change a rotational speed and a torque of an engine, and can change a transmission ratio of an output shaft and an input shaft in a fixed manner or based on a gear. Components of the transmission 15 may include a variable-speed transmission mechanism, a control mechanism, a power output mechanism, and the like. A main function of the transmission mechanism is to change a value and direction of the torque and rotational speed. A main function of the control mechanism is to control the transmission mechanism and implement changes in the gear ratio of the transmission, that is, to implement gear shifting, thereby achieving speed and torque variation.

The dashboard camera ECU 124 is configured to manage the dashboard camera 16.

Components of the dashboard camera 16 may include a host, a vehicle speed sensor, data analysis software, and the like. The dashboard camera 16 is an instrument that records an image and a sound of a vehicle in a traveling process, including related information such as traveling time, a speed, and a location. In embodiments of this application, when the vehicle travels, the vehicle speed sensor collects a wheel rotation speed, and sends vehicle speed information to the dashboard camera 16 through the CAN bus.

### The ABS ECU 125 manages the ABS 17.

The ABS 17 automatically controls a value of braking force of a brake when the vehicle brakes, so that wheels are not locked and are in a state of rolling and sliding, to ensure that adhesion between the wheels and the ground is a maximum value. In a braking process, when an electronic control apparatus determines, based on a wheel rotation speed signal input by a wheel rotation speed sensor, that the wheels tend to be locked, the ABS enters an anti-lock braking pressure adjustment process.

The sensor system 18 may include an acceleration sensor, a vehicle speed sensor, a vibration sensor, a gyroscope sensor, a radar sensor, and the like. The acceleration sensor and the vehicle speed sensor are configured to detect a speed of the vehicle 200. The vibration sensor may be disposed in an airbag and another position, and is configured to detect whether the vehicle 200 is collided. The gyroscope sensor may be configured to determine a motion posture of the vehicle 200. The radar sensor may include a lidar, an ultrasonic radar, a millimeter-wave radar, and the like. The radar sensor is configured to emit an electromagnetic wave to illuminate a target and receive an echo from the target, so as to obtain information such as a distance from the target to an electromagnetic wave transmission point, a distance change rate (radial velocity), a direction, and a height, and then recognize another vehicle, a pedestrian, a roadblock, or the like near the vehicle 200.

The camera system 19 may include a plurality of cameras, and the camera is configured to capture a static image or a video. The camera in the camera system 19 may be disposed at a position like a front of the vehicle, a rear of the vehicle, a side edge, or inside the vehicle, to implement functions such as assisted driving, driving recording, panoramic surround view, and in-vehicle monitoring.

The sensor system 18 and the camera system 19 may be configured to detect an ambient environment, so that the vehicle 200 makes a corresponding decision to cope with an environment change. For example, the sensor system 18 and the camera system 19 may be configured to complete a task of focusing on the ambient environment in an autonomous driving phase.

In addition, the vehicle 200 may further include a plurality of interfaces, for example, a USB interface, an RS-232 interface, and an RS485 interface, and may be externally connected to a camera, a microphone, a headset, and a user electronic device.

It may be understood that the structure shown in embodiments of this application constitutes no specific limitation on the vehicle system. The vehicle 200 may include more or fewer components than those shown in the figure, or a combination of a part of the components, or splits from a part of the components, or an arrangement of different components. The components shown in the figure may be implemented by hardware, software, or a combination of software and hardware.

For example, the vehicle 200 may further include a battery, a vehicle light, a wiper, a dashboard, a speaker, an auxiliary control unit (auxiliary control unit, ACU), an intelligent entry and startup system (passive entry passive start, PEPS), an OBU (on board unit on board unit), a body control module (body control module, BCM), a charging interface, and the like.

A software system of the electronic device may use a layered architecture, an event-driven architecture, a microkernel architecture, a microservice architecture, or a cloud architecture. In embodiments of this application, a mobile operating system with a hierarchical architecture is used as an example to describe a software structure of the electronic device.

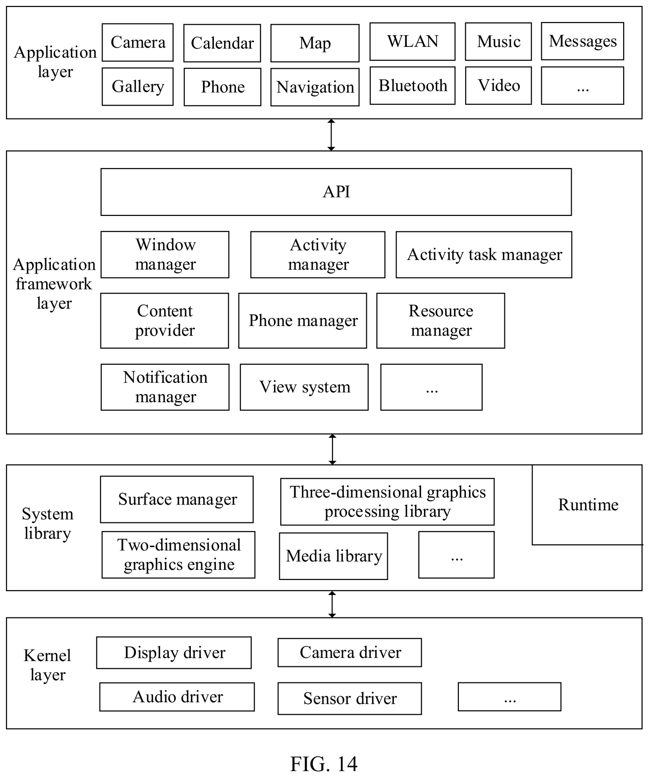

FIG. 14 is a block diagram of a software structure of an electronic device according to an embodiment of this application.

In a layered architecture, software is divided into several layers, and each layer has a clear role and task. The layers communicate with each other through a software interface. In some embodiments, a mobile operating system is divided into four layers: an application layer, an application framework layer/core service layer, an underlying library and runtime, and a kernel layer from top to bottom.

The application layer may include a series of application packages.

As shown in FIG. 14, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

In this application, the application framework layer of the electronic device may include some interfaces used to support the method provided in this application, such as a getDisplayTypeByUser interface, an isDisplayTopUser interface, a swapUsersBetweenDisplay interface, a currentUser switch interface, a switchUserToDisplay interface, and a StartUserToDisplay interface. The foregoing interfaces are provided for each application at the application layer to invoke, and are also provided for each system service at the application framework layer to invoke.

As shown in FIG. 14, the application framework layer may include a window manager (window manager), an activity manager (activity manager), an application running management server, a content provider, a view system, a phone manager, a resource manager, a notification manager, and the like.

The window manager provides a window management service WMS to manage a window program. The window manager may obtain a size of a display, determine whether there is a status bar, perform screen locking, take a screenshot, and the like.

The activity manager provides an activity management service AMS, and is configured to manage each activity. The activity manager may manage a life cycle of each activity, for example, start an activity or terminate an activity.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying text and a control for displaying an image. The view system may be configured to construct an application. A display interface may include one or more views. For example, a display interface including a notification icon of Messages may include a text display view and an image display view.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or scroll bar text, for example, a notification of an application that is run on a background, or may be a notification that appears on the screen in a form of a dialog window. For example, text information is prompted in the status bar, an alert tone is made, the electronic device vibrates, or an indicator blinks.

A service provided by each manager at the application framework layer may be used by each user space of the electronic device.

The runtime may be all code libraries, frameworks, and the like that are needed for running a program. For example, for the C language, the runtime includes a series of function libraries needed for running a C program. For the Java language, in addition to a kernel library, the runtime further includes a virtual machine and the like needed for running a Java program. The kernel library may include a function that needs to be invoked in the Java language.

The underlying library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example operation process of software and hardware of the electronic device with reference to a photographing scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a touch operation, and a control corresponding to the touch operation is a control of a camera application icon is used. The camera application invokes an interface of the application framework layer to enable the camera application, then enables the camera driver by invoking the kernel layer, and captures a static image or a video through the camera 193.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

This application further provides an electronic device. The electronic device may include a memory and a processor. The memory may be configured to store a computer program. The processor may be configured to invoke the computer program in the memory, so that the electronic device performs the method performed by the electronic device in any one of the foregoing embodiments.

This application further provides a vehicle. The vehicle may include the electronic device provided in this application. The electronic device may be implemented as a head unit.

This application further provides a chip system. The chip system includes at least one processor, configured to implement functions related to the electronic device in any one of the foregoing embodiments.

In a possible design, the chip system further includes a memory, the memory is configured to store program instructions and data, and the memory is located inside or outside the processor.

The chip system may include a chip, or may include a chip and another discrete component.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

This application further provides a computer program product. The computer program product includes a computer program (which may also be referred to as code or instructions). When the computer program is run, a computer is enabled to perform the method performed by the electronic device in any one of the foregoing embodiments.

This application further provides a computer-readable storage medium. The computer-readable storage medium stores a computer program (which may also be referred to as code or instructions). When the computer program is run, a computer is enabled to perform the method performed by the electronic device in any one of the foregoing embodiments.

Implementations of this application may be randomly combined to achieve different technical effect.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In the descriptions of embodiments of this application, "/" indicates or, unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more than two.

The terms "first" and "second" are merely intended for a purpose of description, and shall not be understood as an indication or implication of relative importance or an implicit indication of a quantity of indicated technical features. Therefore, a feature limited by "first" and "second" may explicitly or implicitly include one or more features. In the descriptions in embodiments of this application, unless otherwise stated, "a plurality of" means two or more.

The term "user interface (user interface, UI)" in embodiments of this application is a medium interface for interaction and information exchange between an application or an operating system and a user. The user interface implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element like text, an icon, a button, a menu, a tab, a text box, a dialog box, a status bar, a navigation bar, or a widget that is displayed on a display of the electronic device.

In summary, what is described above is merely embodiments of the technical solutions of this application, but is not intended to limit the protection scope of this application. Any modification, equivalent replacement, improvement, or the like made based on the disclosure of this application shall fall within the protection scope of this application.

## Claims

1. A method for using a multi-screen electronic device, wherein the method is applied to an electronic device comprising a first screen and a second screen, and the method comprises:
displaying a user interface of a first application in a first user space on the first screen, and displaying a user interface of a first application in a second user space on the second screen; and
displaying a user interface of a second application in a third user space on the first screen, and continuously displaying the user interface of the first application in the second user space on the second screen.

2. The method according to claim 1, wherein a package name of the first application in the first user space and a package name of the first application in the second user space are consistent.

3. The method according to claim 1 or 2, wherein the first application in the first user space and the first application in the second user space are installed based on a same installation package.

4. The method according to any one of claims 1 to 3, wherein the electronic device further comprises one processing chip, and the first user space, the second user space, and the third user space run on the processing chip.

5. The method according to any one of claims 1 to 4, wherein before the user interface of the first application installed in the first user space is displayed on the first screen, and the user interface of the first application installed in the second user space is displayed on the second screen, the method further comprises:
receiving, by the electronic device, a power-on operation; and
first skipping displaying a second home screen on the second screen, then displaying a first home screen on the first screen, and displaying the second home screen on the second screen, wherein
an application corresponding to an application icon displayed on the first home screen is installed in the first user space, and an application corresponding to an application icon displayed on the second home screen is installed in the second user space.

6. The method according to any one of claims 1 to 5, wherein after the user interface of the first application in the second user space is continuously displayed on the second screen, the method further comprises:
displaying, on the second screen, a user interface provided by the first user space, wherein
a quantity of applications provided by the first user space on the second screen is less than a quantity of applications provided by the first user space on the first screen.

7. The method according to any one of claims 1 to 6, wherein after the user interface of the first application in the second user space is continuously displayed on the second screen, the method further comprises:
displaying the user interface of the first application in the first user space on the second screen, wherein
functions provided by the first application in the first user space on the second screen are less than functions provided by the first application in the first user space on the first screen.

8. The method according to any one of claims 1 to 7, wherein
before the user interface of the first application in the first user space is displayed on the first screen, and the user interface of the first application in the second user space is displayed on the second screen, the method further comprises: storing a correspondence between the first screen and the first user space, and storing a correspondence between the second screen and the second user space; and
before the user interface of the second application in the third user space is displayed on the first screen, and the user interface of the first application in the second user space is continuously displayed on the second screen, the method further comprises: updating the correspondence between the first screen and the first user space to a correspondence between the first screen and the third user space.

9. The method according to any one of claims 1 to 8, wherein before the user interface of the first application in the first user space is displayed on the first screen, the method further comprises:
determining a screen type of the first screen on which the first user space is located; and
determining, based on the screen type of the first screen, the applications provided by the first user space on the first screen, or the functions provided by the first application in the first user space on the first screen.

10. The method according to any one of claims 1 to 9, wherein before the user interface of the first application in the first user space is displayed on the first screen, the method further comprises:
determining whether the first user space is a foreground user space of the first screen; and
if the first user space is the foreground user space of the first screen, starting an activity of the first application in the first user space, and drawing a window of the first application.

11. The method according to any one of claims 1 to 10, wherein after the user interface of the first application in the first user space is displayed on the first screen, and the user interface of the first application in the second user space is displayed on the second screen, and before the user interface of the second application in the third user space is displayed on the first screen, the method further comprises:
switching the foreground user space of the first screen from the first user space to the third user space.

12. The method according to any one of claims 1 to 5, wherein after the user interface of the second application in the third user space is displayed on the first screen, and the user interface of the first application in the second user space is continuously displayed on the second screen, the method further comprises:
exchanging the third user space running in the foreground of the first screen with the second user space running in the foreground of the second screen.

13. The method according to any one of claims 1 to 5, wherein after the user interface of the second application installed in the third user space is displayed on the first screen, and the user interface of the first application installed in the second user space is continuously displayed on the second screen, the method further comprises:
switching a foreground user space of the second screen from the second user space to a fourth user space.

14. The method according to any one of claims 1 to 13, wherein the first screen is a central display in a vehicle, and the second screen is a passenger screen or a rear screen in the vehicle.

15. The method according to any one of claims 1 to 14, wherein
before the user interface of the first application in the first user space is displayed on the first screen, and the user interface of the first application in the second user space is displayed on the second screen, the method further comprises: logging in to a first account on the first screen, and logging in to a second account on the second screen; and
before the user interface of the second application in the third user space is displayed on the first screen, the method further comprises: switching a logged-in-to account on the first screen from the first account to a third account.

16. An electronic device, comprising one or more processors, one or more memories, a first screen, and a second screen, wherein the first screen, the second screen, and the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 15.

17. A vehicle, comprising the electronic device according to claim 16.

18. A computer-readable storage medium, comprising instructions, wherein when the instructions are run on an electronic device comprising a first screen and a second screen, the electronic device is enabled to perform the method according to any one of claims 1 to 14.
